Europäisches Patentamt

European Patent Office

Office européen des brevets

(11) Numéro de publication: **0 252 847 B1**

## (12) FASCICULE DE BREVET EUROPEEN

(45) Date de publication de fascicule du brevet: **01.04.92** (51) Int. Cl.5: **G01N 3/38**

(21) Numéro de dépôt: **87401610.8**

(22) Date de dépôt: **08.07.87**

(54) **Procédé et dispositif de détermination du coefficient de frottement interne d'un échantillon de matériau ferromagnétique.**

(30) Priorité: **11.07.86 FR 8610214**

(43) Date de publication de la demande:
**13.01.88 Bulletin 88/02**

(45) Mention de la délivrance du brevet:
**01.04.92 Bulletin 92/14**

(84) Etats contractants désignés:
**AT BE CH DE ES FR GB GR IT LI LU NL SE**

(56) Documents cités:
**FR-A- 1 545 590**

**JOURNAL OF SCIENTIFIC INSTRU-MENTS(JOURNAL OF PHYSICS E), vol, 1, no. 7, juillet 1968, pages 735-737, Londres, GB; G.V. BEATON: "Apparatus for the determination of internal friction and young's modulus at high frequencies"**

**JOURNAL OF NONDESTRUCTIVE EVALUA-TION, vol. 2, no. 1, mars 1981, pages 65-74, plenum Publishing Corp., New York, US; R.D. ADAMS et al.: "Resonance testing of cast iron"**

(73) Titulaire: **USINOR ACIERS**
**La Défense 9 4 place de la Pyramide**
**F-92800 Puteaux(FR)**

(72) Inventeur: **Brun, Charles Georges Henri**
**46 rue Louis Blanc**
**F-60160 Montataine(FR)**
Inventeur: **Olivier, Christian Raymond**
**11 avenue de l'Europe**
**F-60100 Creil(FR)**

(74) Mandataire: **Polus, Camille et al**
**c/o Cabinet Lavoix 2, Place d'Estienne d'Orves**
**F-75441 Paris Cedex 09(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

JOURNAL OF PHYSICS E: SCIENTIFIC INS-
TRUMENTS, vol. 7, no. 6, juin 1974, pages
476-480, Londres, GB; O.J. EDER et al.: "A
fast digital method for the measurement of
internal friction and elastic moduli of solids"

JOURNAL OF PHYSICS E: SCIENTIFIC INS-
TRUMENTS, vol. 7, no. 5, mai 1974, pages
343-345, Londres, GB; R.M. VAN ESSEN et al.:
"Measurements of low frequency internal
friction in metals"

INSTRUMENTS AND EXPERIMENTAL TECHNI-
OUES, no. 1, janvier-février 1969, pages
187-190, New York, US; B.YA. PINES et al.:
"Measurement of the internal friction due to
high-frequency transverse oscillations in filamentary crystals"

THE REVIEW OF SCIENTIFIC INSTRUMENTS,
vol. 39, no. 11, novembre 1968, pages
1727-1730, New York, US; D.P. DETWILER et
al.: "Apparatus for the precision measurement of internal friction"

## Description

La présente invention concerne un dispositif de détermination du coefficient de frottement interne d'un échantillon de forme allongée et de matériau ferromagnétique, notamment pour la détermination de la teneur en éléments interstitiels de celui-ci.

A l'échelle macroscopique, le frottement interne se manifeste par un retard à l'apparition d'une déformation d'un échantillon lorsqu'une contrainte est appliquée sur celui-ci. Ce phénomène de retard est encore appelé relaxation. Dans le cas où l'on applique une contrainte sinusoïdale sur l'échantillon, la déformation de celui-ci est également sinusoïdale et le frottement interne se manifeste alors par un déphasage $\phi$ entre la contrainte et la déformation. Le coefficient de frottement interne $Q^{-1}$ est alors défini par la relation suivante :

$$Q^{-1} = tg\ \phi.$$

En cas d'absence de frottement interne, ce coefficient $Q^{-1}$ est nul et la déformation est en phase avec la contrainte.

Dans la pratique, ce coefficient de frottement interne $Q^{-1}$ est déterminé à partir de la mesure du décrément logarithmique des vibrations d'un échantillon oscillant librement, par la relation :

$$Q^{-1} = d_{1n}/\pi$$

Il est à noter que le décrément logarithmique $d_{1n}$ est le logarithme naturel du rapport de deux amplitudes de vibrations successives.

Lorsque l'on fait varier la température de l'échantillon ou sa fréquence de vibration, le coefficient de frottement interne $Q^{-1}$ passe par un ou plusieurs maxima, appelés pics de Snoek, correspondant chacun à un type d'éléments interstitiels.

La hauteur de ce ou de ces pics étant proportionnelle à la teneur de l'échantillon en éléments interstitiels correspondants, il est donc possible à partir de ces mesures de déterminer la teneur en éléments interstitiels de l'échantillon considéré.

A l'échelle atomique, le frottement interne s'explique par un mouvement des atomes interstitiels. Sous l'effet d'une contrainte instantanée, une partie de ces éléments diffuse vers d'autres interstices orientés différemment. Le temps nécessaire au réarrangement des éléments interstitiels est appelé le temps de relaxation.

Sous l'action d'une contrainte sinusoïdale, les éléments interstitiels sautent alternativement d'un site à l'autre. Ce mouvement entre en résonance à la température du pic de Snoek qui est d'autant plus élevée que la fréquence de vibration est grande. L'amortissement des oscillations est alors maximal.

Il existe dans l'état de la technique, un certain nombre d'appareils permettant de mesurer ce frottement interne dû aux éléments interstitiels dans l'acier.

Dans tous ces dispositifs connus, l'échantillon est mis en régime d'oscillation sous l'effet d'une excitation. Cette excitation est ensuite supprimée de manière que l'échantillon oscille librement et que l'on puisse mesurer l'amortissement des oscillations.

Le mode de déformation et la géométrie de l'échantillon conditionnent la fréquence des oscillations et donc la gamme de température de l'essai.

On connaît par exemple dans l'état de la technique, l'oscillateur dit Chevenard ou pendule de Kê, qui est un pendule de torsion comportant un volant d'inertie suspendu par l'échantillon qui se présente sous la forme d'un fil. Le pic de Snoek est obtenu par mesure de l'amortissement des oscillations pour différentes températures.

De nombreux perfectionnements ont été apportés à ce montage de base et ont permis d'obtenir par exemple le pendule inversé, le pendule double de Boulanger et le pendule double de Collette. Parmi ces trois pendules cités, le pendule double de Collette présente l'avantage de permettre des mesures sur des échantillons en forme de lame.

On connaît également dans l'état de la technique des systèmes oscillant en flexion.

On connaît également par le document " Journal of Scientific Instruments" (Journal of Physics E), vol.1, n° 7, Juillet 1968, pages 735-737, G.V. Beaton : "Apparatus for the determination of internal friction and Young's modulus at high frequencies ", un procédé de détermination du coefficient de frottement interne d'un échantillon de forme allongée et de matériau ferromagnétique, notamment pour la détermination de la teneur en éléments intersticiels de celui-ci.

Selon ce procédé, on excite l'échantillon par voie électrostatique, pour le mettre en régime d'oscillations longitudinales, on coupe l'excitation, on mesure l'atténuation de ces oscillations en comptant le nombre N d'oscillations amorties dont l'amplitude est comprise entre deux amplitudes prédéterminées appartenant à la courbe d'amortissement et on détermine le coefficient de frottement interne de l'échantillon à partir de ce nombre d'oscillations.

Le document " Journal of Physics E : Scientific Instruments", vol. 7, n° 6, juin 1974, pages 476-480, O.J. Eder et al : " A fast digital method for the measurement of internal friction and elastic moduli of solids", apprend que l'on peut travailler à température fixe dans des procédés de détermination du coefficient de frottement interne d'un échantillon.

Cependant, tous ces dispositifs présentent un certain nombre d'inconvénients.

En effet, ces dispositifs sont relativement fastidieux à mettre en oeuvre. Ils requièrent généralement un matériel relativement important et un personnel très qualifié. Par ailleurs, ces dispositifs ne donnent aucune indication sur la cinétique de précipitation des éléments interstitiels, sauf dans le cas où on effectue des traitements supplémentaires de vieillissement artificiel.

Le but de l'invention est donc de résoudre les problèmes évoqués ci-dessus en proposant

un dispositif de détermination du coefficient de frottement interne, qui permette d'effectuer des mesures sur des échantillons simples, qui soit d'une mise en oeuvre très rapide et très simple avec une bonne fidélité des résultats. Par ailleurs,

ce dispositif présente également une grande sélectivité des causes de frottement interne en minimisant le frottement interne engendré par des phénomènes autres que ceux liés aux éléments interstitiels.

Un autre but de l'invention est de proposer

un dispositif qui permette d'obtenir des informations complémentaires sur la cinétique de précipitation du carbone ou de l'azote dans l'acier et qui puisse être intégré dans le cadre d un contrôle de fabrication d'une unité plus importante.

A cet effet, l'invention a pour objet un dispositif de détermination du coefficient de frottement interne d'un échantillon de forme allongée et de matériau ferromagnétique, notamment pour la détermination de la teneur en éléments interstitiels de celui-ci, du type comportant des moyens d'excitation

pour mettre ledit échantillon en régime d'oscillations longitudinales, des moyens de coupure des moyens d'excitation, des moyens de détection et de comptage des oscillations amorties, après coupure de ladite excitation pour permettre la détermination dudit coefficient de frottement interne, caractérisé en ce que les moyens d'excitation comportent des moyens d'excitation par voie électromagnétique comprenant trois enroulements cylindriques coaxiaux et entourant ledit échantillon dont un enroulement primaire disposé autour de l'une des extrémités de l'échantillon et relié à des premiers moyens d'alimentation pour faire osciller ledit échantillon par magnétostriction, dans le sens longitudinal, un enroulement de polarisation disposé autour de la partie centrale de l'échantillon et relié à des seconds moyens d'alimentation pour assurer une polarisation magnétique de celui-ci, et un enroulement secondaire disposé autour de l'autre extrémité de l'échantillon et relié aux moyens de détection et de comptage des oscillations amorties dont l'amplitude est supérieure ou égale à l'amplitude initiale des oscillations multipliée par un coefficient $\alpha$.

Selon un autre aspect, l'invention a également pour objet une application de ce dispositif à l'étude de la cinétique de précipitation d'un élément interstitiel dans l'acier, dans laquelle la température

de l'échantillon est maintenue à une valeur déterminée correspondant au pic de Snoek pour l'élément interstitiel considéré, on suit l'évolution isotherme du coefficient de frottement interne, en mesurant la variation de la hauteur du pic de Snoek en fonction du temps et on en déduit la cinétique de précipitation à partir de la cinétique d'affaissement du pic.

L'invention sera mieux comprise à l'aide de la description qui va suivre, donnée uniquement à titre d'exemple et faite en se référant aux dessins annexés, sur lesquels :

- la Fig.1 représente un graphique illustrant l'évolution d'une contrainte au cours d'une mesure de coefficient de frottement interne;
- la Fig.2 représente un graphique illustrant l'évolution du coefficient de frottement interne avec le temps et la température;
- la Fig.3 représente une enceinte de mesure entrant dans la constitution d'un dispositif selon l'invention;
- la Fig.4 représente un schéma synoptique de différents organes entrant dans la constitution d'un dispositif selon l'invention;
- la Fig.5 représente un schéma d'un générateur de courant entrant dans la constitution d'un dispositif selon l'invention;
- la Fig.6 représente un schéma d'un régulateur de tension entrant dans la constitution d'un dispositif selon l'invention;
- la Fig.7 représente un schéma de moyens d'amplification et de filtrage entrant dans la constitution d'un dispositif selon l'invention;
- la Fig.8 représente un schéma d'un amplificateur de puissance entrant dans la constitution d'un dispositif selon l'invention;
- la Fig.9 représente un schéma d'un circuit de commande entrant dans la constitution d'un dispositif selon l'invention;
- la Fig.10 représente un schéma d'un circuit logique de commande de l'amplificateur de puissance et de remise à zéro d'un compteur d'amortissement entrant dans la constitution d'un dispositif selon l'invention;
- la Fig.11 représente un schéma de moyens de coupure de l'alimentation de l'amplificateur de puissance, entrant dans la constitution d'un dispositif selon l'invention;
- la Fig.12 représente un schéma de moyens de comptage et d'affichage des oscillations, entrant dans la constitution d'un dispositif selon l'invention; et
- la Fig.13 représente un schéma de moyens de régulation de température de l'enceinte de mesure, entrant dans la constitution d'un dispositif selon l'invention.

Le procédé mis en oeuvre par un dispositif de détermination du coefficient de frottement interne, selon l'invention, consiste à exciter par voie électromagnétique un échantillon de forme allongée et de matériau ferromagnétique, pour le mettre en régime d'oscillations longitudinales, à couper cette excitation, à mesurer l'atténuation de ces oscillations en comptant le nombre N d'oscillations amorties dont l'amplitude est supérieure ou égale à l'amplitude initiale de ces oscillations, multipliée par un coefficient $\alpha$ et à déterminer le coefficient de frottement interne de l'echantillon, à partir de ce nombre d'oscillations.

En effet, l'utilisation de vibrations longitudinales permet d'augmenter la fréquence de vibration de l'échantillon entrainant une réduction du temps de mesure et une amélioration de la précision de celle-ci.

La fréquence propre des vibrations de l'échantillon peut être calculée par la relation suivante :

$$f = \sqrt{\frac{E}{4d\,l^2}}$$

dans laquelle E désigne le module d'élasticité du matériau utilisé, l la longueur de l'échantillon, d la densité du matériau et f la fréquence fondamentale des vibrations longitudinales de l'échantillon à la résonance.

Ainsi par exemple, dans le cas d'un échantillon d'acier doux d'une longueur de 100 mm, la fréquence propre des vibrations est voisine de 25 KHz.

L'échantillon est maintenu en oscillation par magnétostriction, comme cela sera décrit par la suite.

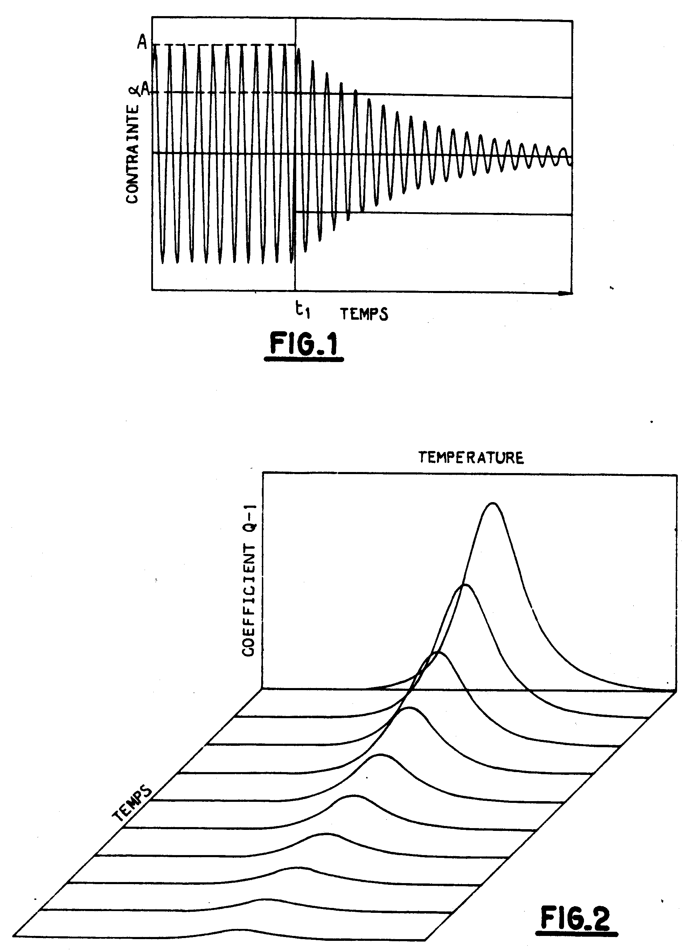

Ainsi qu'il est représenté sur la Fig.1, un échantillon est soumis à un régime d'oscillations entretenues jusqu'au temps t1 correspondant à la coupure de l'excitation de celui-ci. Après t1, et donc coupure de l'excitation, l'échantillon est soumis à un régime d'oscillations amorties qui permet de déterminer le coefficient de frottement interne de cet échantillon, en comptant le nombre N d'oscillations amorties dont l'amplitude est supérieure ou égale à l'amplitude initiale A de ces oscillations, multipliée par un coefficient $\alpha$.

Ainsi, dans l'exemple représenté sur la Fig.1, ce nombre N est égal à 5. A partir de ce nombre d'oscillations amorties, on détermine le coefficient $Q^{-1}$ de frottement par la relation suivante :

$$Q^{-1} = \left( L_n \frac{1}{\alpha} \right) / \pi N$$

Dans le cas de cette Fig.1, le coefficient est égal à 0,54, ce qui permet de déterminer le coefficient de frottement interne $Q^{-1}$ de l'échantillon testé par la relation mentionnée précédemment et d'obtenir $Q^{-1} = 392 \times 10^{-4}$.

Il est à noter que durant cette mesure, l'échantillon est porté à la température du pic de Snoek qui dans ces conditions opératoires, est voisine de 185°C pour le carbone et 165°C pour l'azote.

On peut donc fixer la température de l'échantillon au pic de Snoek et suivre l'évolution isotherme du coefficient de frottement interne $Q^{-1}$ avec le temps, on obtient alors avec une bonne fidélité, la hauteur du pic de Snoek initiale, ainsi que la cinétique d'affaissement du pic, c'est-à-dire la cinétique de précipitation de l'élément interstitiel considéré.

Une application du procédé tel qu'il vient d'être décrit consiste donc dans l'étude de la cinétique de précipitation d'un élément interstitiel dans l'acier, dans laquelle la température de l'échantillon est maintenue constante à une valeur déterminée correspondant au pic de Snoek pour l'élément interstitiel considéré, à mesurer la variation de la hauteur du pic de Snoek en fonction du temps et à en déduire la cinétique de précipitation à partir de la cinétique d'affaissement du pic.

Cependant, on peut également faire varier la température de l'échantillon de manière à faire apparaître le pic de Snoek représentant le coefficient de frottement interne $Q^{-1}$ en fonction de la température, et dont la hauteur est une fonction linéaire de la concentration en éléments interstitiels du matériau, par exemple en carbone ou en azote. Cependant, il est difficile de balayer de manière suffisamment rapide une gamme de températures des échantillons pour éviter une précipitation par vieillissement artificiel.

Un exemple de variation du coefficient de frottement interne $Q^{-1}$ avec le temps, correspondant à la cinétique de précipitation, et avec la température, correspondant au pic de Snoek, est représenté sur la Fig.2.

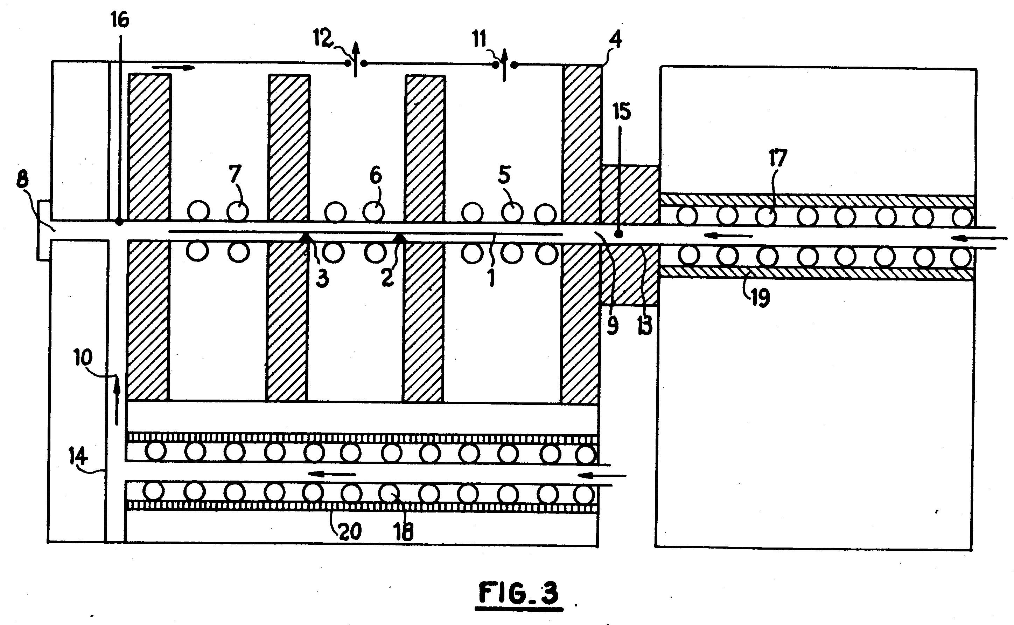

Les mesures sont effectuées dans une cellule représentée schématiquement sur la Fig.3. Un échantillon 1 de forme allongée et de matériau ferromagnétique repose sur des pièces de support 2 et 3 en matière isolante, constituées par exemple par des couteaux en Téflon, et disposées à l'intérieur d'une cellule de mesure chauffée 4.

A l'intérieur de cette cellule chauffée 4 sont disposés trois enroulements cylindriques, coaxiaux et entourant ledit échantillon 1. Ces trois enroulements comportent un enroulement primaire 5 disposé autour de l'une des extrémités de l'échantillon et qui, comme on le verra par la suite, est relié à une première source d'alimentation pour faire osciller l'échantillon 1 par magnétostriction, dans le sens longitudinal. Un enroulement de polarisation 6 est disposé autour de la partie centrale de l'échantillon et est relié à des seconds moyens d'alimentation pour assurer une polarisation magnétique de celui-ci. Un enroulement secondaire 7 est disposé autour de l'autre extrémité de l'échantillon et est relié à des moyens de détection et de comptage des oscillations amorties.

La cellule comporte une première ouverture 8 pour le passage de l'échantillon dans la cellule et des entrées d'air 9 et 10 reliées à des moyens de soufflage d'air chaud, constituant des moyens de chauffage de ladite cellule. Des ouvertures 11 et 12 sont également prévues dans les parois de la cellule 4 pour la sortie d'air.

Les deux entrées d'air chaud 9 et 10 de la cellule, sont reliées aux moyens de chauffage par des conduits 13 et 14 dont l'un, 13, débouche en regard de l'échantillon, de manière à chauffer celui-ci directement par convection. Des moyens de contrôle de la température, constitués par exemple par des thermocouples Chromel/Alumel 15 et 16, disposés dans les conduits de soufflage d'air chaud, permettent de commander la température de l'air soufflé dans l'enceinte, afin de réguler celle-ci de manière relativement précise.

Les moyens de chauffage de l'air sont constitués par des résistances chauffantes 17 et 18 disposées autour des conduits d'admission d'air, de manière à chauffer l'air circulant dans ces conduits et sont elles-mêmes entourées par des tubes isolants 19 et 20.

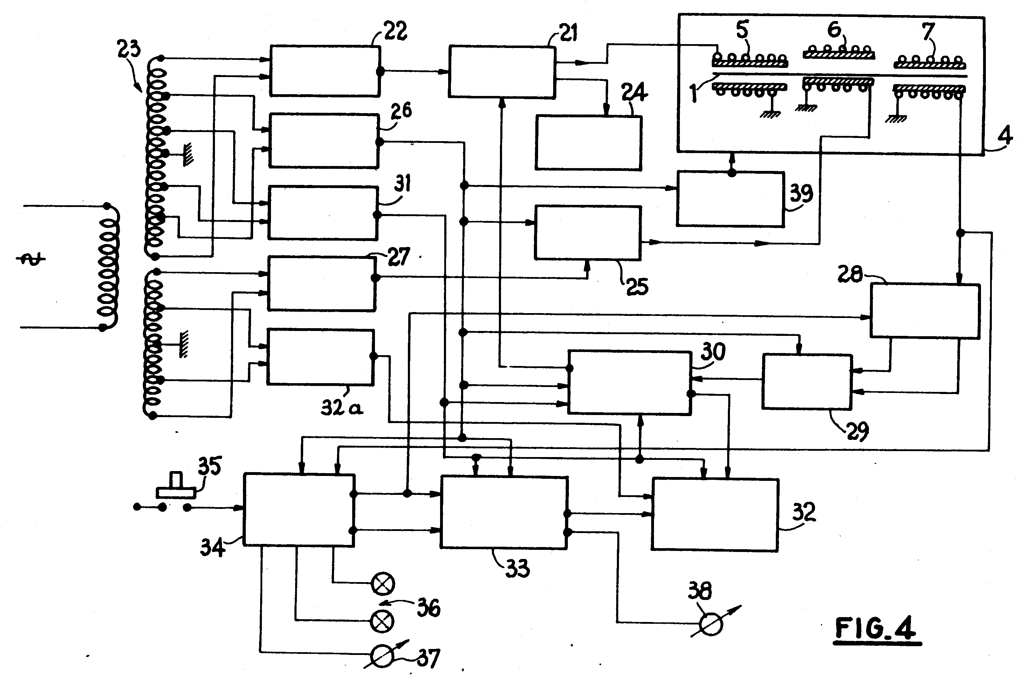

Ainsi qu'on peut le voir sur la Fig.4, l'enroulement primaire 5 est relié à la sortie d'un amplificateur de puissance 21 dont l'entrée est reliée à des moyens d'alimentation 22 eux-mêmes reliés à une sortie d'un transformateur 23 branché sur le réseau d'alimentation. Un fréquencemètre 24 est également connecté à la sortie de l'amplificateur de puissance 21 de manière à contrôler la fréquence des oscillations imprimées à l'échantillon 1.

L'enroulement de polarisation 6 est relié à la sortie d'un générateur de courant 25 dont les deux entrées sont reliées à des moyens d'alimentation 26 et 27. Les entrées de ces moyens d'alimentation sont reliées à des sorties du transformateur 23.

L'enroulement secondaire 7 est quant à lui relié à l'entrée de moyens de régulation de tension 28 dont les sorties sont reliées aux entrées de moyens de pré-amplification et de filtrage 29. La sortie de ces moyens de pré-amplification et de filtrage 29 est reliée à l'entrée de moyens 30 d'amplification et de remise à zéro d'un compteur d'amortissement, dont une sortie est reliée à l'amplificateur de puissance 21 d'alimentation de l'enroulement primaire. Ces moyens 30 sont également reliés aux moyens d'alimentation 26 et à des moyens d'alimentation 31. Une sortie de ces moyens 30 est reliée à des moyens de comptage et de visualisation 32 dont une entrée est reliée à des moyens d'alimentation 32a et dont une autre entrée est reliée à des moyens de mise en forme 33. L'entrée de ces moyens de mise en forme 33 est reliée à des moyens de commande et de visualisation 34 dont l'entrée est commandée par un bouton-poussoir de test d'amortissement 35.

Un certain nombre de voyants 36 permet de connaître l'état du dispositif en indiquant le mode de fonctionnement dans lequel se trouve le dispositif. Un curseur 37 est également disposé sur les moyens de commande 34 de manière à permettre un réglage de l'am-plitude de la tension provenant de l'enroulement secondaire.

Un autre curseur 38 est également relié aux moyens de mise en forme 33 de manière à permettre un réglage de l'amplitude de la tension de comptage.

A la mise sous tension du dispositif, les moyens de soufflage d'air chaud, sont alimentés pour amener l'echantillon à la température voulue. Par ailleurs,l'échantillon est également mis en oscillation. A cet égard, on a décrit dans le brevet US. 3 706 026, un appareil pour déterminer les fréquences de résonance d'un échantillon de matériau magnétostrictif, dans lequel ledit échantillon est placé à l'intérieur de trois enroulements analogues à ceux utilisés pour mettre en vibration l'échantillon dans le dispositif selon l'invention.

L'enroulement de polarisation est donc traversé par un courant continu de manière à soumettre l'échantillon à un champ magnétique uniforme qui augmente sa perméabilité. Le coefficient de couplage entre les enroulements primaire et secondaire augmente donc, ce qui provoque l'amorçage des oscillations à la fréquence propre de chaque échantillon, sous l'effet de l'excitation de celui-ci par l'enroulement primaire 5 alimenté en conséquence, de manière à faire vibrer l'échantillon par effet de magnétostriction.

Par ailleurs, les parois de Block se trouvent ainsi fixées, ce qui supprime toute cause de frottement interne d'origine magnétique. L'excitation de l'échantillon et sa polarisation magnétique engendrent alors une force électromotrice induite fonction de l'échantillon, dans l'enroulement secondaire. Il y a lieu de noter que cette tension induite provient d'une variation de flux magnétique et que celle-ci procède d'une variation de perméabilité (effet Vilari) et non d'une variation de longueur. En effet, la déformation de l'échantillon reste inférieure à $10^{-4}$% et peut donc être négligée. La température à l'intérieur de la cellule est portée par exemple à 185° ± 1°C par l'intermédiaire des moyens de soufflage et cette température est maintenu constante, par l'intermédiaire de moyens de régulation de température 39.

A la suite de l'actionnement du bouton-poussoir 35 de test d'amortissement, l'alimentation de l'enroulement primaire est coupée, par l'arrêt de l'amplificateur de puissance 21. L'échantillon est alors soumis à un régime d'oscillations amorties qui se traduit à la sortie de l'enroulement secondaire 7 par un signal dont l'amplitude des oscillations est également amortie. Ce signal est alors traité par les moyens de régulation de tension 28, les moyens de préamplification et de filtrage 29 et les moyens de mise en forme 33 de manière que les moyens de comptage 32 puissent compter le nombre d'oscillations dont l'amplitude est supérieure à l'amplitude initiale des oscillations multipliée par un coefficient $\alpha$, égal par exemple à 0,54, et affiche le résultat de manière à permettre la calcul du coefficient de frottement interne par la relation mentionnée précédemment.

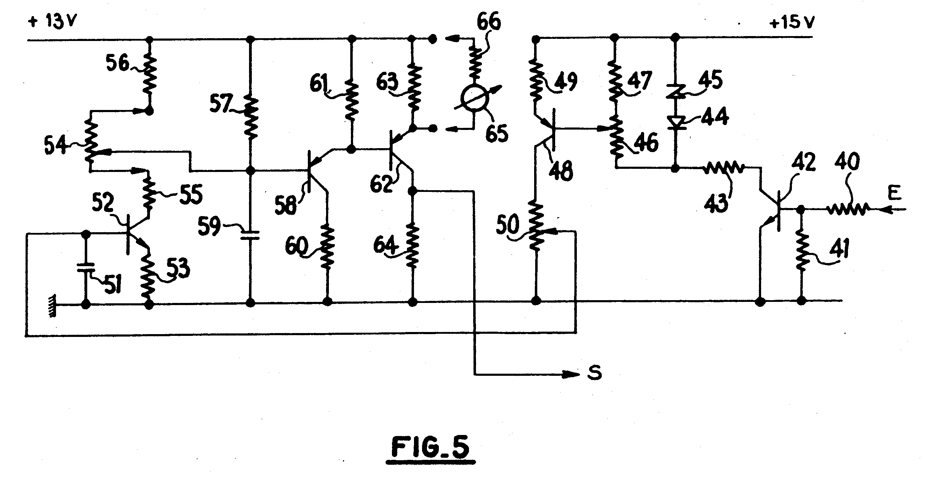

L'enroulement de polarisation 6 reçoit donc un courant continu du générateur de courant 25 qui est par exemple constitué par le circuit représenté sur la Fig.5. Le signal de déclenchement qui peut être soit automatique, soit manuel, est appliqué à une borne E d'une résistance 40 dont l'autre borne est reliée à la masse à travers une résistance 41, et à la base d'un transistor NPN 42. L'émetteur du transistor 42 est relié à la masse et son collecteur est relié à une borne d'une résistance 43 dont l'autre borne est reliée à une borne d'une alimentation + 15 V par l'intermédiaire d'une diode 44 et d'une diode Zener 45 montées en inverse. Un potentiomètre 46 et une résistance 47 en série, sont branchés en parallèle aux bornes de ces diodes 44 et 45. Le curseur du potentiomètre 46 est relié à la base d'un transistor PNP 48 dont l'émetteur est relié au + 15 V par l'intermédiaire d'une résistance 49. Le collecteur de ce transistor 48 est relié à la masse à travers un potentiomètre 50. Le curseur de ce potentiomètre est relié à la masse à travers un condensateur 51 et à la base d'un transistor NPN 52. L'émetteur de ce transistor 52 est relié à la masse à travers une résistance 53, et son collecteur est relié à une borne d'un potentiomètre 54 à travers une résistance 55. L'autre borne de ce potentiomètre 54 est reliée à une borne d'alimentation + 13 V par l'intermédiaire d'une résistance 56. Le curseur de ce potentiomètre 54 est relié au + 13 V par l'intermédiaire d'une résistance 57, à la base d'un transistor PNP 58 et à la masse à travers un condensateur 59. Le collecteur de ce transistor PNP 58 est relié à la masse à travers une résistance 60. L'émetteur de ce transistor est relié au + 13 V par l'intermédiaire d'une résistance 61. Cet émetteur est également relié à la base d'un transistor PNP 62 l'émetteur est relié au + 13 V, par l'intermédiaire d'une résistance 63 et dont le collecteur est relié à la masse à travers une résistance 64.

Un dispositif de commande de marche-arrêt 65 en série avec une résistance 66 est connecté en parallèle aux bornes de la résistance 63. Le collecteur du transistor 62 est relié à l'une des bornes de l'enroulement de polarisation 6 de manière à lui fournir un courant de polarisation magnétique de l'échantillon. Les transistors 52 et 58 constituent un premier générateur de courant qui fixe la tension sur la base des transistors 58 et 62 ce qui permet de fixer le courant envoyé à l'enroulement de polarisation 6.

L'autorisation d'application de ce courant à l'enroulement de polarisation 6 est commandée par l'application d'une tension, par exemple de + 5V, sur la base du transistor 42 par l'intermédiaire de l'entrée du signal de déclenchement mentionné précédemment. Ainsi qu'il a été précisé, cette entrée peut être soit manuelle soit automatique.

Le potentiomètre 54 peut être disposé sur la face avant d'un panneau de commande et permet de faire varier le courant de polarisation par exemple de 0 à 3 ampères. Par ailleurs, un ampèremètre disposé sur la face avant du tableau de commande permet également de contrôler cette valeur du courant.

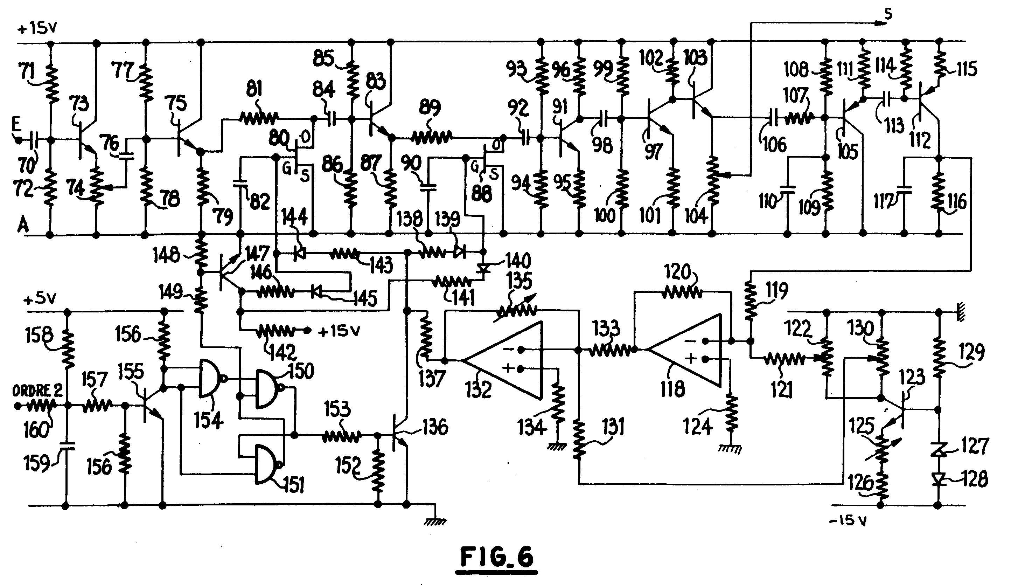

Lorsque ce courant de polarisation est appliqué à l'enroulement 6, et que l'enroulement primaire 5 est également alimenté, il apparaît aux bornes de l'enroulement secondaire 7, une tension sinusoïdale induite fonction de l'échantillon 1 disposé au centre de ces enroulements. La fréquence de ce signal est par exemple comprise entre 24,5 et 26,5 KHz et son amplitude entre 0,1 et 1,2 V pour l'échantillon décrit précédemment. Le signal recueilli sur cet enroulement secondaire est appliqué aux moyens 28 de régulation de tension. Ces moyens de régulation sont représentés en détail sur la Fig.6. Le signal de sortie de l'enroulement secondaire est appliqué à une borne E d'un condensateur 70 dont l'autre borne est reliée au + 15 V par l'intermédiaire d'une résistance 71 et à une ligne de référence A par l'intermédiaire d'une résistance 72. Cette borne du condensateur 70 est également reliée à la base d'un transistor NPN 73 dont le collecteur est relié au + 15 V et l'émetteur, à la ligne de référence A par l'intermédiaire d'un potentiomètre 74. Le curseur de ce potentiomètre est relié à la base d'un transistor NPN 75 par l'intermédiaire d'un condensateur 76 et cette base du transistor 75 est reliée au + 15 V par l'intermédiaire d'une résistance 77 et à la ligne A par l'intermédiaire d'une résistance 78. Le collecteur de ce transistor 75 est relié au + 15 V et son émetteur est relié à la ligne A par l'intermédiaire d'une résistance 79.

L'émetteur de ce transistor 75 est également relié au drain d'un transistor à effet de champ 80 par l'intermédiaire d'une résistance 81. La grille de ce transistor 80 est reliée à la ligne A par l'intermédiaire d'un condensateur 82. Le drain de ce transistor 80 est également relié à la base d'un transistor NPN 83 par l'intermédiaire d'un condensateur 84. Le collecteur du transistor 83 est relié directement au + 15V. La base du transistor 83 est également reliée au + 15V par l'intermédiaire d'une résistance 85 et à la ligne A par l'intermédiaire d'une résistance 86. La source du transistor 80 est reliée à la ligne A. L'émetteur du transistor 83 est relié à la ligne A par l'intermédiaire d'une résistance 87 et au drain d'un transistor à effet de champ 88 par l'intermédiaire d'une résistance 89. La grille de ce transistor 88 est reliée à la ligne A par l'intermédiaire d'un condensateur 90 et sa source est reliée directement à la ligne A. Le drain de ce transistor 88 est également relié à la base d'un transisotr NPN 91 par l'intermédiaire d'un condensateur 92. Cette base du transistor 91 est également reliée au + 15 V par l'intermédiaire d'une résistance 93 et à la ligne A par l'intermédiaire d'une résistance 94. L'émetteur du transistor 91 est relié à la ligne A par une résistance 95 et son collecteur est relié au + 15 V par l'intermédiaire d'une résistance 96 et à la base d'un transistor NPN 97 par un condensateur 98. La base de ce transistor 97 est reliée au + 15 V par l'intermédiaire d'une résistance 99 et à la ligne A par l'intermédiaire d'une résistance 100. L'émetteur de ce transistor 97 est relié à la ligne A par l'intermédiaire d'une résistance 101. Le collecteur de ce transistor 97 est relié au + 15 V par l'intermédiaire d'une résistance 102 et à la base d'un transistor NPN 103 dont le collecteur est relié directement au + 15 V. L'émetteur de ce transistor 103 est relié à la ligne A par l'intermédiaire d'un potentiomètre 104 dont le curseur constitue la sortie S des moyens de régulation 28. L'émetteur du transistor 103 est également relié à la base d'un transistor PNP 105 par l'intermédiaire d'un condensateur 106 en série avec une résistance 107. Cette base est également reliée au + 15 V par une résistance 108 et à la ligne A par une résistance 109 en parallèle avec un condensateur 110. Le collecteur de ce transistor 105 est relié directement à la ligne A. Son émetteur est relié au + 15 V par l'intermédiaire d'une résistance 111.

Cet émetteur est également relié à la base d'un transistor PNP 112 par l'intermédiaire d'un condensateur 113. La base de ce transistor est reliée au + 15 V par l'intermédiaire d'une résistance 114. L'émetteur de ce transistor 112 est relié au + 15 V par une résistance 115 et son collecteur est relié à la ligne A à travers une résistance 116 en parallèle avec un condensateur 117.

Ce collecteur est également relié à l'entrée inverseuse d'un amplificateur opérationnel 118 à travers une résistance 119. La sortie de cet amplificateur opérationnel 118 est rebouclée sur son entrée inverseuse à travers une résistance 120. Cette entrée inverseuse est également reliée à une borne d'une résistance 121 dont l'autre borne est reliée au curseur d'un potentiomètre 122 connecté entre la masse et le collecteur d'un transistor NPN 123. L'entrée non inverseuse de l'amplificateur opérationnel 118 est reliée à la masse à travers une résistance 124. L'émetteur du transistor 123 est relié à une source d'alimentation - 15 V par l'intermédiaire d'une résistance réglable 125 en série avec une résistance 126. La base de ce transistor 123 est reliée au - 15 V à travers une diode Zener 127 en série avec une diode 128, montées en inverse. Cette base est également reliée à la masse à travers une résistance 129. Le collecteur du transistor 123 est également relié à la masse à travers un potentiomètre 130 dont le curseur est relié par l'intermédiaire d'une résistance 131 à l'entrée inverseuse d'un amplificateur opérationnel 132. Cette entrée est également reliée à la sortie de l'amplificateur opérationnel 118 à travers une résistance 133. L'entrée non inverseuse de l'amplificateur opérationnel 132 est reliée à la masse à travers une résistance 134. La sortie de cet amplificateur opérationnel 132 est rebouclée sur son entrée inverseuse à travers une résistance réglable 135. La sortie de cet amplificateur opérationnel 132 est également reliée au collecteur d'un transistor NPN 136 à travers une résistance 137. L'émetteur de ce transistor 136 est relié directement à la masse. Le collecteur de ce transistor est également relié à travers une résistance 138 en série avec une diode 139, à la grille du transistor à effet de champ 88 mentionné précédemment. Cette grille est également reliée au + 15 V à travers une diode 140, une résistance 141 et une résistance 142 en série. Le collecteur du transistor 136 est également relié à travers une résistance 143 et une diode 144, à la grille du transistor à effet de champ 80 mentionné précédemment. Cette grille est également reliée par l'intermédiaire d'une diode 145 et d'une résistance 146 au collecteur d'un transistor NPN 147, auquel est relié la résistance 142 reliée au + 15 V, mentionnée précédemment. L'émetteur de ce transistor 147 est relié à la ligne de référence A. La base de celui-ci est également reliée à cette ligne de référence A par l'intermédiaire d'une résistance 148 et par l'intermédiaire d'une résistance 149 à une entrée d'une porte NAND 150 et à la sortie d'une porte NAND 151. La base du transistor NPN 136 est reliée à la masse à travers une résistance 152, à l'entrée de la porte NAND 151 et à la sortie de la porte NAND 150 à travers une résistance 153. L'une des entrées de la porte NAND 150 est reliée à la sortie d'une porte NAND 154 dont les entrées sont reliées au collecteur d'un transistor NPN 155 relié à la ligne d'alimentation + 5 V à travers une résistance 156 et à l'une des entrées de la porte NAND 151. L'émetteur de ce transistor 155 est relié directement à la masse. La base de ce transistor est reliée à la masse à travers une résistance 156 et à une borne d'une résistance 157 dont l'autre borne est reliée à une résistance 158 connectée à la ligne d'alimentation + 5 V, à un condensateur 159 connecté à la masse et à une résistance 160 recevant un signal ORDRE 2 qui sera décrit plus en détail par la suite.

Le circuit qui vient d'être décrit constitue donc les moyens de régulation du signal de sortie provenant de l'enroulement secondaire 7. Ce signal est régulé par les transistors 80 et 88 montés en cascade. Un signal de référence est fourni par le générateur de courant constitué par le transistor 123 et les éléments associés, les amplificateurs opérationnels 118 et 132 amplifiant la tension d'erreur entre ce signal de référence et le signal de sortie de l'enroulement secondaire 7 et appliquant sur les grilles des transistors 80 et 88, le résultat de cette amplification.

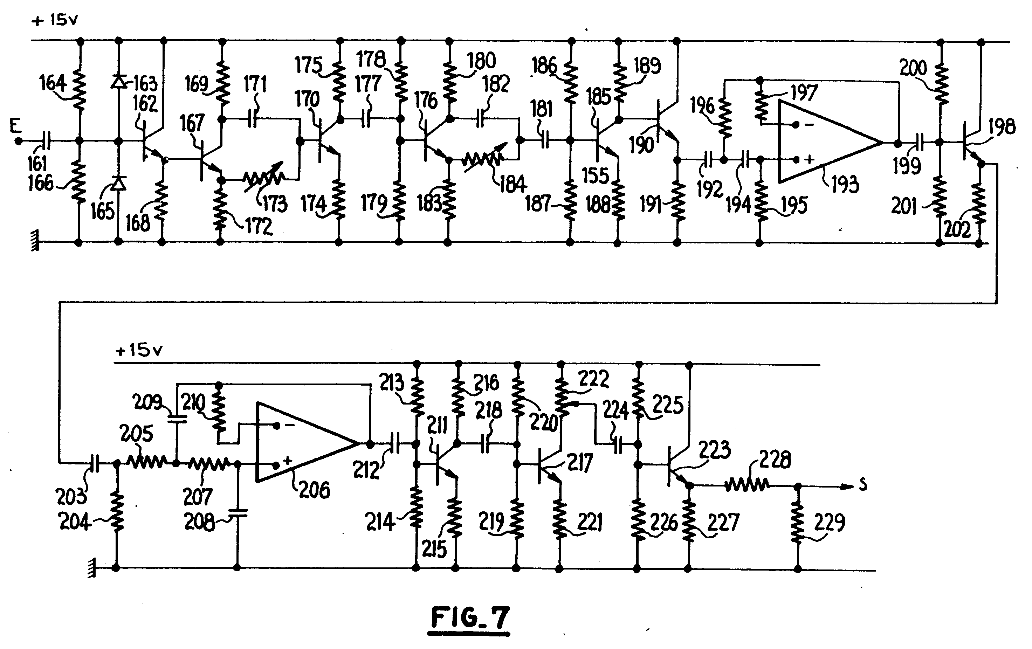

Ce signal de sortie des moyens de régulation est ensuite appliqué aux moyens de pré-amplification et de filtrage 29 qui peuvent être constitués par exemple par un circuit tel que représenté sur la Fig.7. Le signal de sortie des moyens de régulation de tension 28 est appliqué à une borne d'un condensateur 161 dont l'autre borne est reliée à la base d'un transistor NPN 162 dont le collecteur est relié à la ligne d'alimentation + 15 V. Cette base est également reliée au + 15 V par l'intermédiaire d'une diode 163 et d'une résistance 164 montées en parallèle. Cette base est également reliée à la masse par l'intermédiaire d'une diode 165 et d'une résistance 166 montées en parallèle. L'émetteur du transistor 162 est relié à la base d'un transistor NPN 167 et à la masse par l'intermédiaire d'une résistance 168. Le collecteur du transistor 167 est relié à la ligne d'alimentation + 15 V par l'intermédiaire d'une résistance 169 et à la base d'un transistor NPN 170 par un condensateur 171. L'émetteur du transistor 167 est relié à la masse par une résistance 172 et à la base du transistor 170 par l'intermédiaire d'une résistance réglable 173. L'émetteur du transistor 170 est relié à la masse par une résistance 174. Son collecteur est relié au + 15 V par une résistance 175 et à la base d'un transistor NPN 176 par un condensateur 177. Cette base est également reliée au + 15 V par une résistance 178 et à la masse par une résistance 179. Le collecteur du transistor 176 est relié au + 15 V par une résistance 180 et à une borne d'un condensateur 181 par un condensateur 182. L'émetteur du transistor 176 est relié à la masse par une résistance 183 et à la borne du condensateur 181 mentionnée précédemment par une résistance réglable 184. L'autre borne du condensateur 181 est reliée à la base d'un transistor NPN 185 qui est également reliée au + 15 V par l'intermédiaire d'une résistance 186 et à la masse par une résistance 187. L'émetteur de ce transistor 185 est relié à la masse par une résistance 188. Son collecteur est relié d'une part au + 15 V par une résistance 189 et d'autre part à la base d'un transistor NPN 190 dont le collecteur est relié directement au + 15 V. L'émetteur de ce transistor 190 est relié à la masse à travers une résistance 191 et à une borne d'un condensateur 192.

L'autre borne de ce condensateur 192 est reliée à l'entrée non-inverseuse d'un amplificateur opérationnel 193 à travers un condensateur 194 et cette entrée non-inverseuse de l'amplificateur opérationnel est également reliée à la masse à travers une résistance 195. La borne commune des condensateurs 192 et 194 est également reliée à la sortie de l'amplificateur opérationnel 193 à travers une résistance 196. La sortie de cet amplificateur opérationnel 193 est rebouclée sur son entrée inverseuse par une résistance 197. Cette sortie de l'amplificateur opérationnel 193 est également reliée à la base d'un transistor NPN 198 par un condensateur 199. Cette base est également reliée au + 15 V par une résistance 200 et à la masse par une résistance 201. Le collecteur du transistor 198 est directement relié au + 15 V. Son émetteur est relié à la masse par une résistance 202. Cet émetteur est également relié à une borne d'un condensateur 203 dont l'autre borne est reliée d'une part à la masse par une résistance 204 et d'autre part, à une borne d'une résistance 205. L'autre borne de cette résistance 205 est reliée à l'entrée non-inverseuse d'un amplificateur opérationnel 206 par une résistance 207, cette entrée non-inverseuse de l'amplificateur opérationnel 206 étant reliée à la masse par un condensateur 208. La borne commune des résistances 205 et 207 est également reliée à la sortie de l'amplificateur opérationnel 206 par un condensateur 209. Cette sortie de l'amplificateur opérationnel 206 est également rebouclée sur son entrée inverseuse par une résistance 210. La sortie de l'amplificateur opérationnel 206 est reliée à la base d'un transistor NPN 211 à travers un condensateur 212. Cette base est également reliée au + 15 V par l'intermédiaire d'une résistance 213 et à la masse par une résistance 214. L'émetteur du transistor 211 est relié à la masse par une résistance 215. Son collecteur est relié au + 15 V par une résistance 216 et à la base d'un transistor NPN 217 à travers un condensateur 218. Cette base du transistor 217 est également reliée à la masse par une résistance 219 et au + 15 V par une résistance 220. L'émetteur du transistor 217 est relié à la masse par une résistance 221 et son collecteur est relié au + 15 V par un potentiomètre 222 dont le curseur est relié à la base d'un transistor NPN 223 par un condensateur 224.La base de ce transistor 223 est également reliée au + 15 V par une résistance 225 et à la masse par une résistance 226. Le collecteur de ce transistor 223 est directement relié au + 15 V. L'émetteur de ce transistor est relié à la masse par une résistance 227 et à une borne d'une résistance 228 dont l'autre borne est reliée à la masse par une résistance 229 et constitue la sortie des moyens de pré-amplification et de filtrage mentionnés précédemment.

Le signal de sortie de l'enroulement secondaire après passage dans les moyens de régulation de tension est alors filtré, mis en phase et amplifié. Ce filtrage est réalisé par l'intermédiaire d'un filtre passe-bas constitué par l'amplificateur opérationnel 193 et les éléments associés et par un filtre passe-haut constitué par l'amplificateur opérationnel 206 et les éléments associés. La mise en phase du signal est réalisée par l'intermédiaire de deux circuits RC montés autour des transistors 167 et 176. L'amplification du signal est obtenue par les transistors 211, 217 et 223 permettant d'obtenir un isgnal de sortie suffisant pour pouvoir attaquer correctement l'amplificateur de puissance 21 à travers les moyens 30 mentionnés précédemment.

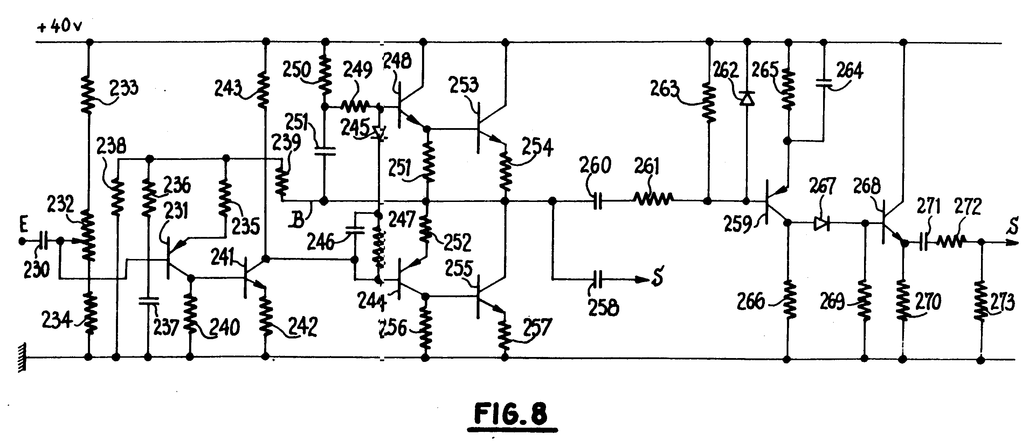

Cet amplificateur de puissance 21 est par exemple constitué par un circuit tel que représenté sur la Fig.8. Le signal de sortie des moyens de pré-amplification et de filtrage est appliqué à une borne d'un condensateur 230 dont l'autre borne est reliée à la base d'un transistor PNP 231 et au curseur d'un potentiomètre 232 relié d'une part à une source d'alimentation + 40 V par une résistance 233 et d'autre part à la masse, par une résistance 234. L'émetteur du transistor 231 est relié à une borne d'une résistance 235 dont l'autre borne est reliée à la masse à travers une résistance 236 en série avec un condensateur 237 et une résistance 238 en parallèle sur cette résistance et ce condensateur. Cette résistance 235 est également reliée à une borne d'une résistance 239 dont l'autre borne délivre un niveau de référence B.

Le collecteur du transistor 231 est relié à la masse à travers une résistance 240 et à la base d'un transistor NPN 241 dont l'émetteur est relié à la masse à travers une résistance 242. Le collecteur de ce collecteur 241 est relié au + 40 V par une résistance 243 et à la base d'un transistor PNP 244. Cette base est également reliée à la cathode d'une diode 245 par un condensateur 246 en parallèle avec une résistance 247. L'anode de cette diode 245 est connectée à la base d'un transistor NPN 248 dont le collecteur est relié directement au + 40 V. Cette base est également reliée à une borne d'une résistance 249 dont l'autre borne est reliée d'une part au + 40 V par une résistance 250 et d'autre part à la ligne de référence B par un condensateur 251. L'émetteur du transistor 248 est relié à la ligne de référence B par une résistance 251 et l'émetteur du transistor 244 est relié à cette ligne B par une résistance 252. L'émetteur du transistor 248 est également relié à la base d'un transistor NPN 253 dont le collecteur est relié au + 40 V. L'émetteur de ce transistor est relié par une résistance 254 à la ligne B. Cette ligne B est également reliée au collecteur d'un transistor NPN 255 dont la base est reliée au collecteur du transistor 244. La base de ce transistor 255 est également reliée à la masse à travers une résistance 256. L'émetteur de ce transistor est relié à la masse à travers une résistance 257.

Cette ligne de référence B est également reliée à une borne d'un condensateur 258 dont l'autre borne constitue la sortie de l'amplificateur de puissance destiné à alimenter l'enroulement primaire. Cette ligne de référence B est également reliée à la base d'un transistor PNP 259 à travers un condensateur 260 et une résistance 261 montés en série. La base de ce transistor 259 est également reliée au + 40 V par une diode 262 et une résistance 263 en parallèle. L'émetteur de ce transistor 259 est relié au + 40 V par un condensateur 264 en parallèle avec une résistance 265. Le collecteur du transistor 259 est relié à la masse par une résistance 266 et à la base d'un transistor 268 par une diode 267. Cette base du transistor 268 est également reliée à la masse par une résistance 269. Le collecteur de ce transistor est relié directement au + 40 V et son émetteur est relié à la masse par une résistance 270. Cet émetteur est également relié à une borne d'un condensateur 271 dont l'autre borne est reliée à une borne d'une résistance 272 dont l'autre borne est reliée à la masse à travers une résistance 273 et constitue la sortie de l'amplificateur de puissance délivrant le signal destiné au fréquencemètre 24 mentionné précédemment.

Cet exemple d'amplificateur qui vient d'être décrit fonctionne en classe AB. Le circuit constitué par les transistors 259 et 268 constituent des moyens de mise en forme du signal de l'amplificateur de puissance pour pouvoir l'appliquer au fréquencemètre.

Il est à noter que dans une variante de réalisation du dispositif, la tension induite dans l'enroulement secondaire 7 peut être maintenu constante, par action sur le taux d'amplification du signal envoyé à l'enroulement primaire par cet amplificateur, ceci dans le but de minimiser et de contrôler à un niveau constant la dissipation d'énergie par effet Vilari qui est proportionnelle au flux magnétique et donc à la tension induite.

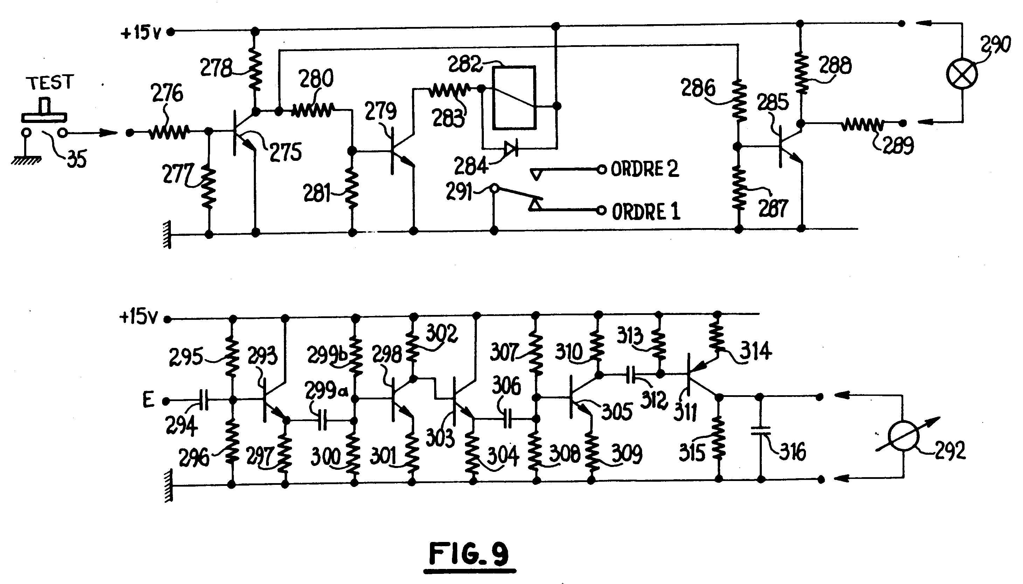

La commande des différents organes qui viennent d'être décrits se fait par l'intermédiaire des moyens de commande et de visualisation 34 mentionnés précédemment. Ces moyens sont constitués par exemple par un circuit tel que représenté sur la Fig.9. On reconnait sur cette Fig.9, le bouton-poussoir de test 35 dont l'une des bornes est reliée à la masse et dont l'autre borne est reliée à la base d'un transistor NPN 275 par une résistance 276. Cette base du transistor 275 est également reliée à la masse à travers une résistance 277. L'émetteur de ce transistor est relié directement à la masse. Le collecteur de ce transistor est relié à la tension d'alimentation + 15 V par l'intermédiaire d'une résistance 278. Ce collecteur est également relié à la base d'un transistor NPN 279 par une résistance 280. Cette base est également reliée à la masse par une résistance 281. L'émetteur du transistor 279 est relié directement à la masse. Le collecteur de ce transistor 279 est relié à un relais 282 par une résistance 283. Une diode de protection 284 est connectée aux bornes de ce relais qui est également relié à la tension d'alimentation + 15 V. Le collecteur du transistor 275 est également relié à la base d'un transistor NPN 285 par une résistance 286 et cette base est également reliée à la masse par une résistance 287. L'émetteur de ce transistor 285 est relié à la masse et son collecteur est relié au + 15 V par une résistance 288. Ce collecteur est également relié à une borne d'une résistance 289 dont l'autre borne constitue, avec la borne + 15V de la tension d'alimentation, des bornes d'alimentation par exemple d'un voyant 290 indiquant à un utilisateur que le dispositif est en mode de test. Le relais 282 commande un contact à deux positions 291 qui, dans l'une de ses positions, délivre un signal ORDRE 1 dont la fonction sera définie plus en détail par la suite, et dans l'autre position, un signal ORDRE 2 qui comme il a été mentionné précédemment, est appliqué aux moyens de régulation de tension par l'intermédiaire de la résistance 160, comme il est représenté sur la Fig.6.

Ces moyens de commande et de visualisation comportent également un circuit séparé permettant d'appliquer sur un voltmètre 292, un signal d'indication de l'amplitude de la tension au bornes de l'enroulement secondaire.

Le signal provenant de l'enroulement secondaire est appliqué à la base d'un transistor NPN 293 par un condensateur 294. La base de ce transistor 293 est reliée à la tension d'alimentation + 15 V par une résistance 295 et à la masse par une résistance 296. Le collecteur de ce transistor 293 est relié au + 15 V. L'émetteur de ce transistor est relié à la masse par une résistance 297 et à la base d'un transistor NPN 298 par un condensateur 299a. Cette base du transistor 298 est reliée au + 15 V par une résistance 299b et à la masse par une résistance 300. L'émetteur du transistor 298 est relié à la masse par une résistance 301. Son collecteur est relié d'une part au + 15 V par une résistance 302 et à d'autre part la base d'un transistor NPN 303, dont le collecteur est relié au + 15 V. L'émetteur de ce transistor 303 est relié à la masse à travers une résistance 304 et à la base d'un transistor NPN 305 à travers un condensateur 306. La base de ce transistor 305 est reliée au + 15 V par une résistance 307 et à la masse par une résistance 308. L'émetteur du transistor 305 est relié à la masse par une résistance 309 et son collecteur est relié au + 15 V par une résistance 310. Le collecteur du transistor 305 est également relié à la base d'un transistor PNP 311 par un condensateur 312. La base du transistor 311 est également reliée au + 15 V par une résistance 313. L'émetteur du transistor 311 est relié au + 15 V par une résistance 314 et son collecteur est relié à la masse par une résistance 315. Un condensateur 316 est connecté en parallèle sur cette résistance 315 de manière à constituer deux bornes d'alimentation du voltmètre 292 mentionné précédemment.

Ainsi qu'il a été mentionné précédemment, le déclenchement de la mesure de l'amortissement des oscillations s'effectue par l'intermédiaire du bouton poussoir 35 qui peut être par exemple disposé sur la face avant d'un coffret de commande. Une masse est appliquée sur la base du transistor 275 permettant d'alimenter le relais 282. Le commutateur 291 commandé par ce relais 282, passe alors dans sa seconde position de manière à envoyer le signal ORDRE 2 vers plusieurs circuits du dispositif de manière à assurer le déclenchement de la mesure de l'amortissement.

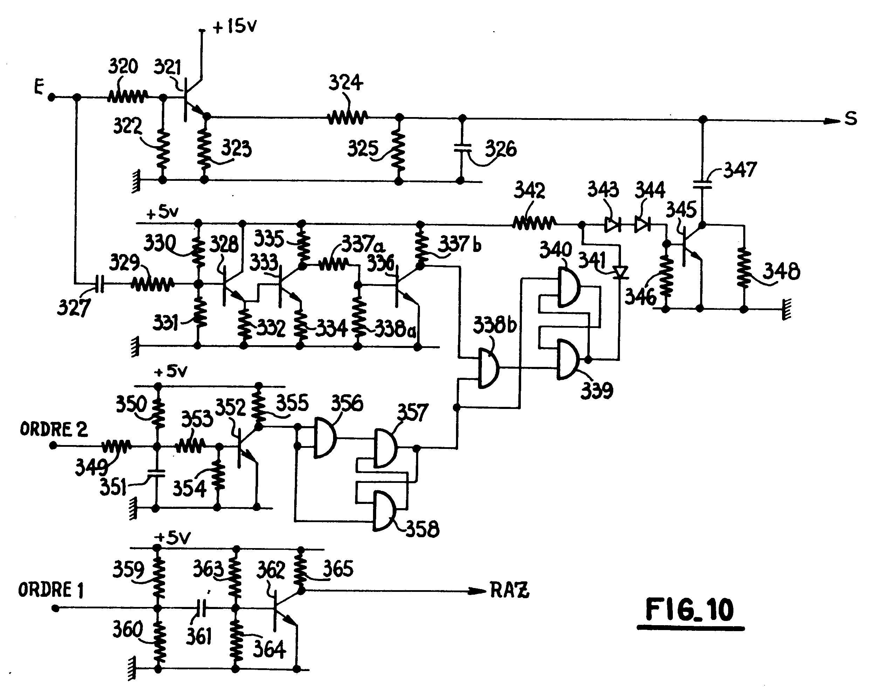

Le signal ORDRE 1 délivré par le commutateur 291 dans sa position de repos est destiné à la remise à zéro d'un compteur d'amortissement qui sera décrit plus en détail par la suite. A cet effet, ces différents signaux délivrés par ce circuit de commande sont appliqués aux moyens logiques 30 de commande de l'amplificateur de puissance et de remise à zéro du compteur d'amortissement. Ces moyens 30 peuvent par exemple être constitués comme il est représenté sur la Fig.10.

Ce circuit reçoit la sortie des moyens de préamplification et de filtrage 29 qui est appliquée sur une borne d'une résistance 320 dont l'autre borne est reliée à la base d'un transistor NPN 321. La base de ce transistor 321 est également reliée à la masse par une résistance 322 et son collecteur est relié au + 15 V. L'émetteur de ce transistor 321 est relié à la masse par une résistance 323 et à une borne d'une résistance 324 dont l'autre borne est reliée à la masse par une résistance 325 et un condensateur 326 en parallèle. Cette borne de la résistance 324 est destinée à appliquer un signal de sortie S sur l'amplificateur de puissance 21 d'alimentation de l'enroulement primaire. Le signal de sortie des moyens de pré-amplification et de filtrage 29 est également appliqué à une borne d'un condensateur 327 dont l'autre borne est reliée à la base d'un transistor NPN 328 par l'intermédiaire d'une résistance 329. La base de ce transistor 328 est également reliée au + 5 V par une résistance 330 et à la masse par une résistance 331. Le collecteur de ce transistor 328 est relié au + 5 V. Son émetteur est relié à la masse par une résistance 332 et à la base d'un transistor NPN 333. L'émetteur de ce transistor 333 est relié à la masse par une résistance 334 et son collecteur est relié au + 5 V par une résistance 335. Le collecteur du transistor 333 est également relié à la base d'un transistor NPN 336 par une résistance 337a. La base de ce transistor 336 est également reliée à la masse par une résistane 338a. L'émetteur du transistor 336 est relié à la masse. Son collecteur est relié d'une part au + 5 V par une résistance 337b et à une borne d'entrée d'une porte ET 338b. La sortie de cette porte ET 338b est reliée à une entrée d'une porte ET 339 dont la sortie est reliée à une borne d'entrée d'une porte ET 340. La sortie de la porte ET 340 est rebouclée sur une entrée de la porte ET 339. La sortie de la porte ET 339 est également reliée à la cathode d'une diode 341 dont l'anode est connectée au + 5 V par l'intermédiaire d'une résistance 342. Cette résistance 342 est également connectée à deux diodes 343 et 344 montées en série et reliées à la base d'un transistor NPN 345. La base de ce transistor 345 est également reliée à la masse par une résistance 346. L'émetteur de ce transistor 345 est relié à la masse et son collecteur est relié d'une part par l'intermédiaire d'un condensateur 347, à la sortie S du circuit destinée à l'amplificateur de puissance 21 mentionné précédemment, et constituée par la borne commune des résistances 324 et 325 et du condensateur 326, et d'autre part, à la masse par une résistance 348.

Ce circuit logique reçoit également les signaux ORDRE 1 et ORDRE 2 délivrés par le circuit de commande décrit précédemment. Le signal ORDRE 2 est appliqué à une borne d'une résistance 349 dont l'autre borne est reliée au + 5 V par une résistance 350 et à la masse par un condensateur 351. Cette résistance est également connectée et à la base d'un transistor NPN 352 par une résistance 353. La base de ce transistor 352 est reliée à la masse par une résistance 354. L'émetteur de ce transistor est également relié à la masse. Son collecteur est relié au + 5 V par une résistance 355. Ce collecteur est également relié aux deux entrées d'une porte ET 356 dont la sortie est reliée à une entrée d'une porte ET 357. Le collecteur du transistor 352 est également relié à une entrée d'une porte ET 358 dont la sortie est rebouclée sur une entrée de la porte ET 357. La sortie de cette porte ET 357 est rebouclée sur une entrée de la porte ET 358. Cette sortie de la porte ET 357 est également reliée à une entrée de la porte ET 338b et de la porte ET 340 mentionnées précédemment.

Le signal ORDRE 1 est appliqué à une résistance 359 reliée au + 5 V, à une résistance 360 reliée à la masse et à une borne d'un condensateur 361 dont l'autre borne est reliée à la base d'un transistor NPN 362. Cette base du transistor 362 est également reliée au + 5 V par une résistance 363 et à la masse par une résistance 364. L'émetteur de ce transistor 362 est relié à la masse. Son collecteur est relié au + 5 V par une résistance 365 et constitue la sortie délivrant un signal de remise à zéro du compteur d'amortissement.

Le circuit qui vient d'être décrit en référence à cette Fig.10 permet de couper l'alimentation de l'enroulement primaire en coupant les moyens d'amplification de puissance 21 décrits en référence à la Fig.4. Le transistor 345 est utilisé à cet effet comme coupe-circuit. Ce transistor met à la masse la tension qui est appliquée à l'amplificateur de puissance lorsque le signal ORDRE 2 est reçu du circuit de commande en réponse à l'actionnement du bouton-poussoir de test 35. La coupure de cette alimentation se fait lorsque la tension appliquée passe à zéro, grâce à un circuit formé par les bistables constitués par les portes ET 356, 357, 358, 338b, 339, 340, et les transistors 328, 333, 336.

Ce circuit reçoit également le signal ORDRE 1 qui permet d'engendrer par l'intermédiaire du transistor 362 un signal de remise à zéro du compteur d'amortissement.

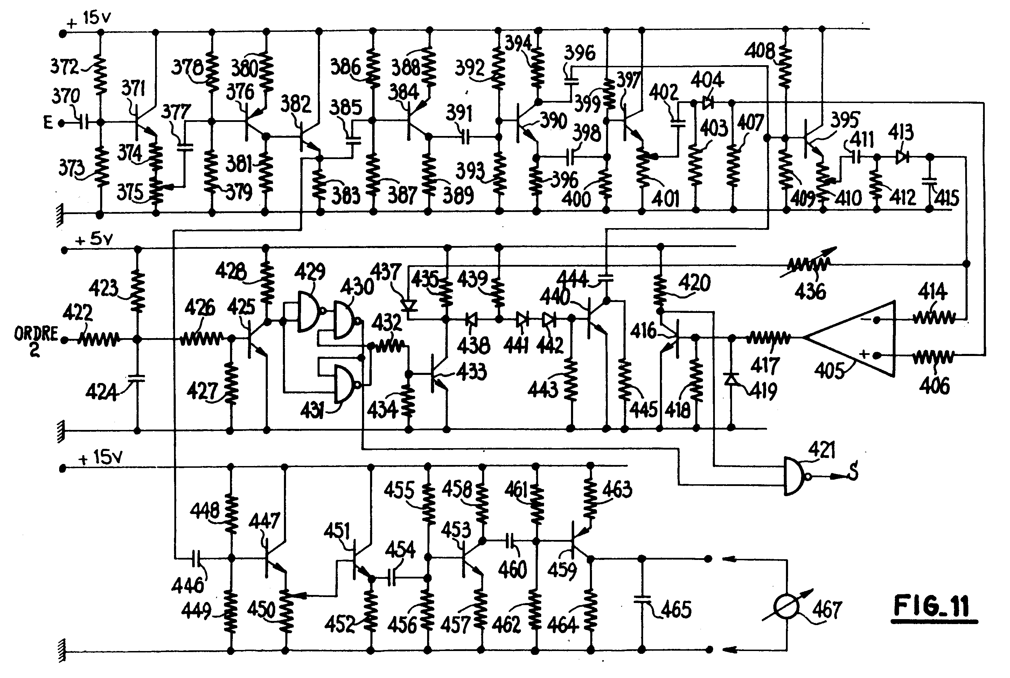

Les moyens de mise en forme 33 du signal de sortie de l'enroulement secondaire pour le comptage peuvent se présenter sous la forme du circuit représenté sur la Figure 11. Le signal provenant des différents moyens de régulation de tension, de pré-amplification et de filtrage tels que décrits précédemment, est appliqué à une borne d'un condensateur 370 dont l'autre borne est reliée à la base d'un transistor NPN 371. La base de ce transistor 371 est également reliée au + 15 V par une résistance 372 et à la masse par une résistance 373. Le collecteur de ce transistor est relié au + 15 V et son émetteur est relié à la masse par une résistance 374 et un potentiomètre 375 dont le curseur est relié à la base d'un transistor PNP 376 par un condensateur 377. La base de ce transistor 376 est également reliée au + 15 V par une résistance 378 et à la masse par une résistance 379. L'émetteur de ce transistor 376 est reliée au + 15 V par une résistance 380 et le collecteur de ce transistor est relié à la masse par une résistance 381. Ce collecteur est également relié à la base d'un transistor NPN 382 dont le collecteur est relié au + 15 V. L'émetteur de ce transistor est relié à la masse par une résistance 383 et à la base d'un transistor PNP 384 par un condensateur 385. La base de ce transistor 384 est également reliée au + 15 V par une résistance 386 et à la masse par une résistance 387. L'émetteur de ce transistor 384 est relié au + 15 V par une résistance 388 et son collecteur est relié à la masse par une résistance 389. Ce collecteur est également relié à la base d'un transistor NPN 390 par un condensateur 391. Cette base est également reliée au + 15 V par une résistance 392 et à la masse par une résistance 393. Le collecteur du transistor 390 est relié au + 15 V par une résistance 394 et à la base d'un transistor NPN 395 par un condensateur 396. L'émetteur du transistor 390 est relié à la masse par une résistance 396 et à la base d'un transistor NPN 397 par un condensateur 398. La base de ce transistor 397 est reliée au + 15 V par une résistance 399 et à la masse par une résistance 400. Le collecteur du transistor 397 est relié au + 15 V et son émetteur est relié à la masse par l'intermédiaire d'un potentiomètre 401. Le curseur de ce potentiomètre est relié à une borne d'un condensateur 402 dont l'autre borne est reliée à la masse par une résistance 403 et à une diode 404 reliée à l'entrée non-inverseuse d'un amplificateur opérationnel 405 par l'intermédiaire d'une résistance 406. Cette entrée non-inverseuse est également reliée à la masse par une résistance 407.

La base du transistor 395 est reliée au + 15 V par une résistance 408 et à la masse par une résistance 409. Le collecteur de ce transistor est relié au + 15 V et son émetteur est relié à la masse par un potentiomètre 410. Le curseur de ce potentiomètre est relié à une borne d'un condensateur 411 dont l'autre borne est reliée à la masse par une résistance 412 et à une diode 413. Cette diode est également reliée à l'entrée inverseuse de l'amplificateur opérationnel 405 par une résistance 414. Cette entrée inverseuse est également reliée à la masse par un condensateur 415. La sortie de cet amplificateur opérationnel est reliée à la base d'un transistor NPN 416 par une résistance 417. La base de ce transistor 416 est reliée à la masse par une résistance 418 aux bornes de laquelle est branchée une diode 419. Le collecteur du transistor 416 est relié au + 15 V par l'intermédiaire d'une résistance 420. Ce collecteur est également relié à une entrée d'une porte NAND 421. L'émetteur du transistor 416 est relié à la masse.

Ce circuit reçoit également le signal ORDRE 2 qui est appliqué à une borne d'une résistance 422. L'autre borne de cette résistance 422 est reliée au + 5 V par un résistance 423, à la masse par un condensateur 424 et à la base d'un transistor NPN 425 par une résistance 426. Cette base du transistor 425 est également reliée à la masse par une résistance 427. L'émetteur de ce transistor est relié à la masse. Son collecteur est relié au + 5 V par une résistance 428 et aux entrées d'une porte NAND 429 dont la sortie est reliée à une entrée d'une autre porte NAND 430. Le collecteur du transistor 425 est également relié à une entrée d'une porte NAND 431. La sortie de la porte NAND 430 est rebouclée sur l'une des entrées de la porte NAND 431 et la sortie de celle-ci est rebouclée sur l'autre entrée de la porte NAND 430. Cette sortie de la porte 431 est également reliée à une borne d'une résistance 432 dont l'autre borne est reliée à la base d'un transistor NPN 433 et à la masse par une résistance 434. L'émetteur du transistor 433 est relié à la masse. Son collecteur est relié au + 5 V par une résistance 435 et à une borne d'une résistance réglable 436 par l'intermédiaire d'une diode 437 montée en inverse. L'autre borne de la résistance réglable 436 est reliée au point commun entre la diode 413, le condensateur 415 et la résistance 414 connectée à l'entrée inverseuse de l'amplificateur opérationnel 405.

Le collecteur du transistor 433 est également relié à la cathode d'une diode 438 dont l'anode est reliée au + 5 V par une résistance 439 et à la base d'un transistor NPN 440 par deux diodes 441 et 442 montées en série avec celle-ci. La base du transistor 440 est également reliée à la masse par une résistance 443. L'émetteur de celui-ci est relié à la masse. Son collecteur est relié à travers un condensateur 444 à la base du transistor 395 et à travers une résistance 445 à la masse. L'autre entrée de la porte NAND 421 est reliée à la sortie de la porte NAND 430.

La sortie S de cette porte NAND 421 constitue la sortie destinée à délivrer le signal qui est appliqué aux moyens de comptage et de visualisation 32.

L'émetteur du transistor 382 est également relié à une borne d'un condensateur 446 dont l'autre borne est reliée à la base d'un transistor NPN 447. Cette base est reliée au + 15 V par une résistance 448 et à la masse par une résistance 449. Le collecteur du transistor 447 est relié au + 15 V et son émetteur est relié à la masse par un potentiomètre 450. Le curseur de ce potentiomètre est relié à la base d'un transistor NPN 451 dont le collecteur est relié au + 15 V. L'émetteur de ce transistor est relié à la masse par une résistance 452 et à la base d'un transistor NPN 453 par un condensateur 454. La base de ce transistor est également reliée au + 15 V par une résistance 455 et à la masse par une résistance 456. L'émetteur du transistor 453 est relié la masse par une résistance 457 et son collecteur est relié au + 15 V par une résistance 458. Ce collecteur est également relié à la base d'un transistor PNP 459 par un condensateur 460. Cette base est également reliée au + 15 V par une résistance 461 et à la masse par une résistance 462. L'émetteur du transistor 459 est relié au + 15 V par une résistance 463 et son collecteur est relié à la masse par une résistance 464. Un condensateur 465 est relié en parallèle aux bornes de cette résistance 464 et un dispositif 467 de contrôle de la tension de comptage est connecté en parallèle aux bornes de ce condensateur.

Lorsque l'ordre de test d'amortissement est donné, l'enroulement primaire 5 n'est plus alimenté comme il a été mentionné précédemment. L'oscillation de l'échantillon passe alors d'un régime d'oscillations auto-entretenues par magnétostriction à un régime d'oscillations amorties. La tension de sortie de l'enroulement secondaire décroit alors de sa valeur initiale Vo pour tendre vers zéro. Le comptage des impulsions qui sert à déterminer le frottement interne de l'échantillon se fait alors pendant un temps t = t1 - to, c'est-à-dire pendant l'intervalle de temps où l'amplitude de la tension aux bornes de l'enroulement secondaire, passe de sa valeur initiale Vo à Vo avec par exemple $\alpha$ = 0,54. Le circuit qui vient d'être décrit permet de déterminer ce temps t, et de mettre en forme les impulsions détectées pour permettre leur comptage. Le signal d'entrée provenant des différents moyens décrits précédemment, est orienté à partir du transistor 390 vers deux autres parties du circuit :

1) vers le transistor 395 pour une détection par l'intermédiaire de la diode 413 et une intégration par l'intermédiaire du condensateur 415. La tension aux bornes du condensateur 415 représente alors la valeur Vo. Il est à noter que la valeur de la tension aux bornes du condensateur 415 peut être considérée comme constante pendant le temps t que dure la mesure de l'amortissement. En effet, la constante de temps de ce circuit est calculée de manière à ne pas perturber la mesure par exemple avec une constante de temps $\tau$ = RC > 60t, C étant constitué par la valeur du condensateur 415, par exemple 1 $\mu$ F, et R étant constitué par la valeur de la résistance 414 reliée à l'entrée inverseuse de l'amplificateur opérationnel 405 et ayant par exemple une valeur de 240 K$\Omega$.

2) Vers le transistor 397 pour une détection par l'intermédiaire de la diode 404. Le signal délivré représente alors V (t), c'est-à-dire l'image de la tension provenant de l'enroulement secondaire dans le temps. Les signaux V (t) et Vo sont ensuite envoyés vers les moyens de comparaison constitués par l'amplificateur opérationnel 405 qui délivre des impulsions tant que la valeur V (t) est supérieure à Vo.

Ces impulsions sont ensuite mises à niveau par le transistor 416, puis sont envoyées vers le circuit de comptage par l'intermédiaire de la porte NAND 421.

Le signal délivré par le bistable constitué par les portes NAND 429, 430 et 431 et le transistor 433 a deux fonctions :

1) court-circuiter l'entrée du transistor 395 pour que la valeur $\alpha$ Vo ne soit pas perturbée par un parasite quelconque pendant le temps t.

2) modifier la valeur de la résistance en parallèle avec le condensateur 415. En effet, en régime d'oscillations entretenues, l'amplitude de la tension V(t) présente un certain nombre de variations que la valeur $\alpha$ Vo doit suivre. La constante de temps doit en effet être faible en régime auto-entretenu pour suivre les évolutions de V(t) et grande en régime libre par rapport à t.

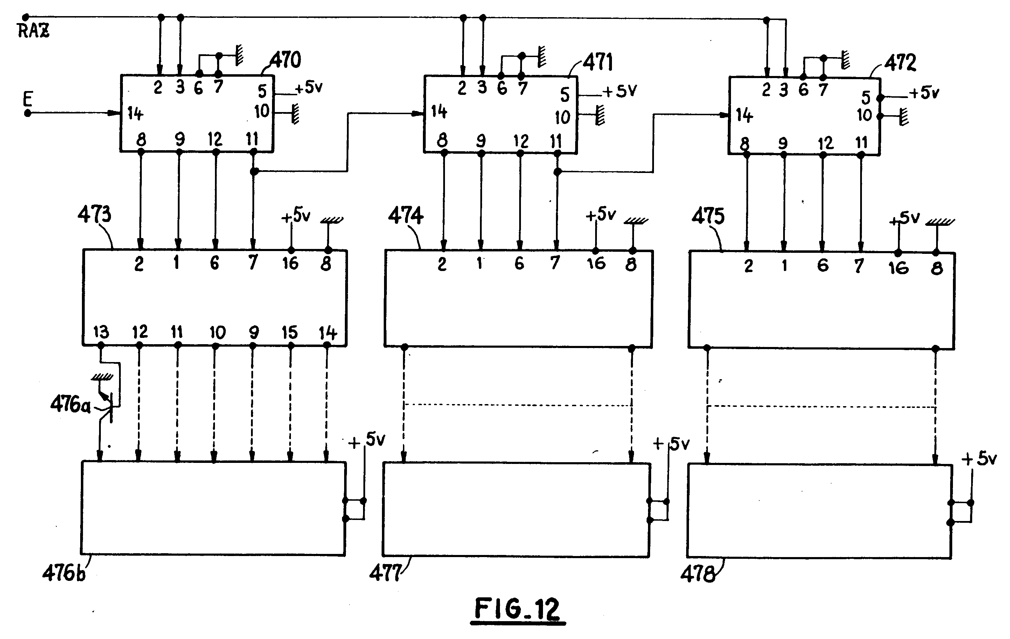

Les impulsions délivrées par ce circuit sont ensuite comptées par l'intermédiaire des moyens 32 de comptage et de visualisation qui peuvent être constitués par exemple par un circuit tel que représenté sur la Fig. 12. Les impulsions sont par exemple appliquées à une série de trois compteurs décimaux 470, 471 et 472 du type par exemple 2N 7490. Le compteur 470 reçoit sur sa borne d'entrée 14 le signal provenant des moyens de mise en forme 33 et sa borne de sortie 11 est reliée à la borne d'entrée 14 du compteur 471. La sortie 11 de ce compteur 471 est également reliée à l'entrée 14 du compteur 472. Les bornes 2 et 3 des compteurs 470, 471 et 472 reçoivent le signal de remise à zéro délivré par les moyens logiques 30. Les bornes 6 et 7 de chaque compteur sont reliées à la masse, les bornes 5 sont reliées à la tension d'alimentation + 5 V, les bornes 10 sont reliées à la masse et les bornes 8, 9, 12 et 11 des compteurs 470, 471 et 472 sont reliées respectivement à des décodeurs 473, 474 et 475.

Ces décodeurs sont par exemple du type N 7448A et les bornes de sortie des compteurs sont reliées aux bornes 1, 2, 6, 7 de ces décodeurs. La borne 16 de chacun des décodeurs est reliée au + 5 V et la borne 8 est reliée à la masse. Les bornes de sortie 9, 10, 11, 12, 13, 14, 15 de ces décodeurs sont reliées chacune à la base d'un transistor NPN, par exemple 476a, dont l'émetteur est relié à la masse et le collecteur à une entrée d'afficheur à sept segments 476b, 477 et 478 permettant d'afficher le nombre d'oscillations amorties en unité, dizaine et centaine, respectivement.

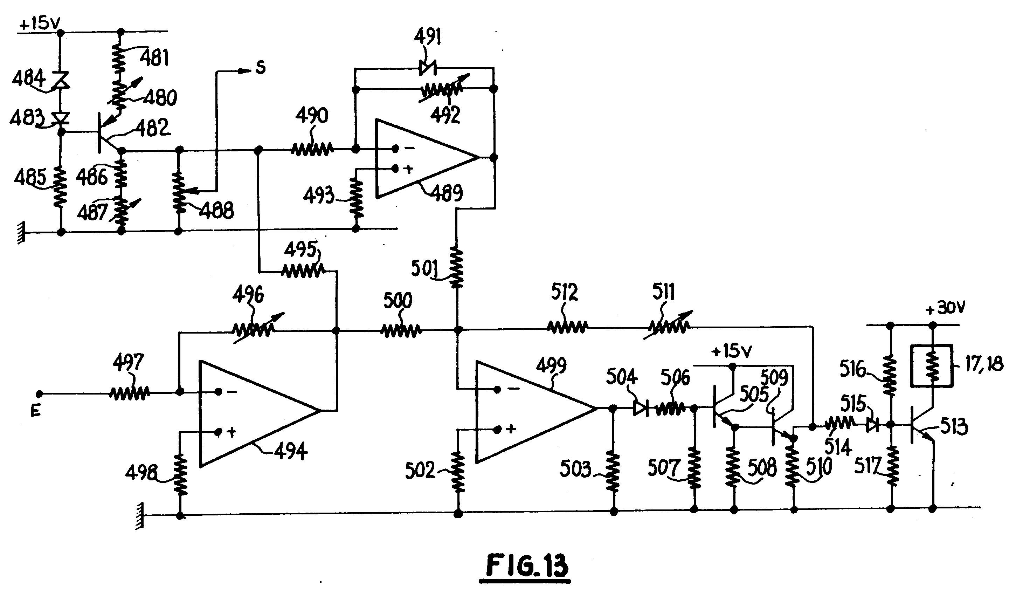

Le dispositif comporte également des moyens 39 de régulation de la température de la cellule dans laquelle se trouve l'échantillon. Ces moyens sont constitués par deux indicateurs de température du type PEN fabriqués par la société CHAUVIN-ARNOUX, des deux thermocouples 15 et 16 mentionnés en référence à la Fig.3, d'une alimentation de puissance et des moyens 39 de régulation de température maintenant la température de la cellule par exemple à 185° ± 1°C. Ces moyens de régulation sont constitués par exemple par un circuit tel que représenté sur la Fig. 13. Une température de consigne réglable est délivrée par un générateur de courant comportant une résistance réglable 480 dont une borne est reliée au + 15 V par l'intermédiaire d'une résistance 481 et dont l'autre borne est reliée à l'émetteur d'un transistor PNP 482. La base de ce transistor 482 est reliée au + 15 V par l'intermédiaire d'une diode 483 et d'une diode Zener 484 montées en série. Cette base est également reliée à la masse par une résistance 485. Le collecteur du transistor 482 est relié à la masse par une résistance 486 et une résistance réglable 487. Ce collecteur est également relié à une borne d'un potentiomètre 488 dont l'autre borne est reliée à la masse et dont le curseur est relié à l'un des indicateurs de température de manière à afficher la température de consigne. Le collecteur du transistor 482 est également relié à une entrée inverseuse d'un amplificateur opérationnel 489 par l'intermédiaire d'une résistance 490. La sortie de cet amplificateur opérationnel 489 est rebouclée sur son entrée inverseuse par l'intermédiaire d'une diode Zener 491 et d'une résistance réglable 492. L'entrée non-inverseuse de cet amplificateur opérationnel 489 est reliée à la masse par l'intermédiaire d'une résistance 493. Le collecteur du transistor 482 est également relié à la sortie d'un amplificateur opérationnel 494 par l'intermédiaire d'une résistance 495. Cette sortie de l'amplificateur opérationnel 494 est également rebouclée sur son entrée inverseuse par l'intermédiaire d'une résistance réglable 496. Cette entrée inverseuse est également reliée à une borne d'une résistance 497 dont l'autre borne reçoit une information provenant de l'autre indicateur de température et recevant un signal représentatif de la température réelle à l'intérieur de la cellule.

L'entrée non-inverseuse de l'amplificateur opérationnel 494 est reliée à la masse par l'intermédiaire d'une résistance 498. La sortie de l'amplificateur opérationnel 494 est reliée à l'entrée inverseuse d'un amplificateur opérationnel 499 par l'intermédiaire d'une résistance 500. La sortie de l'amplificateur opérationnel 489 est également reliée à cette entrée inverseuse de l'amplificateur opérationnel 499 par l'intermédiaire d'une résistance 501. L'entrée non inverseuse de cet amplificateur opérationnel 499 est reliée à la masse par l'intermédiaire d'une résistance 502. La sortie de l'amplificateur opérationnel 499 est reliée à la masse par l'intermédiaire d'une résistance 503 et à l'anode d'une diode 504 dont la cathode est reliée à la base d'un transistor NPN 505 par l'intermédiaire d'une résistance 506.

La base de ce transistor 505 est reliée à la masse par une résistance 507 et son collecteur est relié au + 15 V. L'émetteur de ce transistor 505 est relié à la masse par une résistance 508 et à la base d'un transistor NPN 509 dont le collecteur est également relié au + 15 V. L'émetteur de ce transistor 509 est relié à la masse par une résistance 510 et à l'entrée inverseuse de l'amplificateur opérationnel 499 par une résistance réglable 511 et une résistance 512. L'émetteur du transistor 509 est également relié à la base d'un transistor de puissance NPN 513 par l'intermédiaire d'une résistance 514 et d'une diode 515. La base de ce transistor 513 est reliée à la tension d'alimentation + 30 V par une résistance 516 et à la masse par une résistance 517.

L'émetteur de ce transistor 513 est relié à la masse et son collecteur est relié aux résistances chauffantes 17, 18 des moyens de chauffage décrits en référence à la Fig.3.

La température à l'intérieur de la cellule est donc comparée à une températue de consigne délivrée par le générateur de courant constitué par le transistor 482 et les composants associés et le résultat de cette comparaison pilote le transistor de puissance 513 qui sert à alimenter les résistances chauffantes des moyens de chauffage pour maintenir la température à la valeur affichée.

Les différents moyens d'alimentation des organes qui viennent d'être décrits étant constitués par des alimentations stabilisées connues, on ne les décrira pas plus en détail.

Enfin, il va de soi que des moyens de calcul peuvent être reliés aux moyens de comptage afin de calculer directement le coefficient de frottement interne et par exemple la teneur en éléments interstitiels, à partir du nombre N d'oscillations amorties.

**Revendications**

1. Dispositif de détermination du coefficient de frottement interne d'un échantillon (1) de forme allongée et de matériau ferromagnétique, notamment pour la détermination de la teneur en éléments interstitiels de celui-ci, du type comportant des moyens d'excitation (5, 6, 7) pour mettre ledit échantillon (1) en régime d'oscillations longitudinales, des moyens de coupure (30) des moyens d'excitation, des moyens de détection et de comptage (28, 29, 30, 32, 33) des oscillations amorties, après coupure de ladite excitation pour permettre la détermination dudit coefficient de frottement interne, caractérisé en ce que les moyens d'excitation comportent des moyens d'excitation par voie électromagnétique comprenant trois enroulements cylindriques (5, 6, 7), coaxiaux et entourant ledit échantillon (1), dont un enroulement primaire (5) disposé autour de l'une des extrémités de l'échantillon et relié à des premiers moyens d'alimentation (21, 22) pour faire osciller ledit échantillon par magnétostriction, dans le sens longitudinal, un enroulement de polarisation (6) disposé autour de la partie centrale de l'échantillon (1) et relié à des seconds moyens d'alimentation (25, 26, 27) pour assurer une polarisation magnétique de celui-ci, et un enroulement secondaire (7) disposé autour de l'autre extrémité de l'échantillon (1) et relié aux moyens de détection et de comptage des oscillations amorties dont l'amplitude est supérieure ou égale à l'amplitude initiale des oscillations multipliée par un coefficient $\alpha$.

2. Dispositif selon la revendication 1, caractérisé en ce que les moyens de coupure (30) de l'excitation sont constitués par des moyens de coupure des moyens d'alimentation de l'enroulement primaire (5).

3. Dispositif selon la revendication 1 ou 2, caractérisé en ce que les moyens de détection des oscillations amorties sont constitués par des moyens de comparaison (405) dont l'une des entrées est reliée à la sortie de l'enroulement secondaire (7) par des moyens de traitement de signaux et dont l'autre entrée est reliée à des moyens délivrant un signal de référence.

4. Dispositif selon la revendication 3, caractérisé en ce que les moyens de comparaison sont constitués par un amplificateur opérationnel (405).

5. Dispositif selon la revendication 3 ou 4, caractérisé en ce que les moyens délivrant un signal de référence sont constitués par une résistance (414) et un condensateur (415) connectés à ladite entrée des moyens de comparaison (405) pour appliquer sur celle-ci une tension égale à la valeur initiale de l'amplitude des oscillations multipliée par le coefficient $\alpha$.

6. Dispositif selon l'une quelconque des revendications 3 à 5, caractérisé en ce que les moyens de traitement sont constitués par des moyens de régulation (28), des moyens de filtrage et d'amplification (29) et des moyens de mise en forme (33) des signaux de sortie de l'enroulement secondaire (7).

7. Dispositif selon l'une quelconque des revendications 1 à 6, caractérisé en ce qu'il comporte des moyens d'affichage (32) du nombre N d'oscillations amorties.

8. Dispositif selon l'une quelconque des revendications 1 à 7, caractérisé en ce que lesdits enroulements (5, 6, 7) et ledit échantillon (1) sont disposés dans une cellule de mesure (4) reliée à des moyens de chauffage et en ce qu'il est prévu des moyens de contrôle et de régulation (15, 16, 39) de la température dans ladite cellule (4).

9. Dispositif selon la revendication 8, caractérisé en ce que les moyens (17, 18) de chauffage sont constitués par des moyens de soufflage d'air chaud dans ladite enceinte dont au moins l'un est relié à la cellule (4) par un conduit (13) débouchant en regard de l'une des extrémités dudit échantillon.

10. Dispositif selon la revendication 9, caractérisé en ce que les moyens de chauffage comportent des résistances chauffantes (17, 18) reliées aux moyens de régulation (39) de manière à réguler la température à l'intérieur de ladite cellule (4).

11. Dispositif selon la revendication 10, caractérisé en ce que les moyens de régulation (39) comportent un transistor de puissance (513) relié aux résistances chauffantes (17, 18) de manière à commander leur alimentation pour réguler la température dans ladite cellule (4).

12. Dispositif selon l'une quelconque des revendications 1 à 11, caractérisé en ce que ledit échantillon (1) est posé sur des supports isolants (2, 3) dans lesdits enroulements (5, 6, 7).

13. Dispositif selon la revendication 12, caractérisé en ce que lesdits supports (2, 3) sont en Téflon.

14. Application du dispositif selon l'une quelconque des revendications précédentes à l'étude de la cinétique de précipitation d'un élément interstitiel dans l'acier, dans laquelle la température de l'échantillon est maintenue à une valeur déterminée correspondant au pic de Snoek pour l'élément interstitiel considéré, on suit l'évolution isotherme du coefficient de frottement interne, en mesurant la variation de la hauteur du pic de Snoek en fonction du temps et on en déduit la cinétique de précipitation à partir de la cinétique d'affaissement du pic.

15. Application du dispositif selon la revendication 14, dans laquelle l'élément interstitiel est du carbone.

16. Application du dispositif selon la revendication 14, dans laquelle l'élément interstitiel est de l'azote.

## Claims

1. A device for determining the coefficient of internal friction of an elongate specimen (1) of ferromagnetic material, more particularly to determine its contents of interstitial elements, of the kind comprising exciting means (5, 6, 7) for imparting longitudinal oscillations to said specimen (1), means (30) for cutting off the exciting means, means (28, 29, 30, 32, 33) for detecting and counting the damped oscillations after said excitation has been cut off, to enable the coefficient of internal friction to be determined, characterized in that the exciting means comprise electromagnetic exciting means comprising three coaxial cylindrical windings (5, 6, 7) enclosing said specimen (1), one primary winding (5) being disposed around one of the ends of the specimen and connected to first supply means (21, 22) to impart oscillations in the longitudinal direction to said sample by magnetostriction, a polarization winding (6) disposed around the central portion of said specimen (1) and connected to second supply means (25, 26, 27) to ensure that said sample is magnetically polarized, and a secondary winding (7) disposed around the other end of said specimen (1) and connected to the means for detecting and counting the damped oscillations whose amplitude is greater than or equal to the initial amplitude of the oscillations multiplied by a coefficient $\alpha$.

2. A device according to claim 1, characterized in that the means (30) for cutting off the excitation are formed by means for cutting off the supply means to the primary winding (5).

3. A device according to claims 1 or 2, characterized in that the means for detecting the damped oscillations are formed by comparison means (405) one of whose inputs is connected to the output of the secondary winding (7) via signal processing means, the other input being connected to means delivering a reference signal.

4. A device according to claim 3, characterized in that the comparison means are formed by an operational amplifier (405).

5. A device according to claims 3 or 4, characterized in that the means delivering a reference signal are formed by a resistor (414) and a capacitor (415) which are connected to said input of the comparison means (405) to apply to said input a voltage equal to the initial value of the amplitude of the oscillations multiplied by the coefficient $\alpha$.

6. A device according to any of claims 3 to 5, characterized in that the processing means are formed by regulating means (28), filtering and amplifying means (29) and means (33) for shaping the output signals of the secondary winding (7).

7. A device according to any of claims 1 to 6, characterized in that it comprises means (32) for displaying the number N of damped oscillations.

8. A device according to any or claims 1 to 7, characterized in that said windings (5, 6, 7) and said specimen (1) are disposed in a measuring cell (4) connected to heating means, and means (15, 16, 39) are provided for controlling and regulating the temperature in said cell (4).

9. A device according to claim 8, characterized in that the heating means (17, 18) are formed by means for blowing hot air into said enclosure, at least one of which is connected to the cell (4) via a conduit (13) discharging opposite one of the ends of said specimen.

10. A device according to claim 9, characterized in that the heating means comprise heating resistors (17, 18) so connected to the regulating means (39) as to regulate the temperature inside said cell (4).

11. A device according to claim 10, characterized in that the regulating means (39) comprise a power transistor (513) so connected to the heating resistors (17, 18) as to control their supply to regulate the temperature in said cell (4).

12. A device according to any of claims 1 to 11, characterized in that said cell (1) is placed on insulating supports (2, 3) in said windings (5, 6, 7).

13. A device according to claim 12, characterized in that said supports (2, 3) are of teflon.

14. An application of the device according to any of the preceding claims to studying the precipitation kinetics of an interstitial element in steel, wherein the temperature of the sample is maintained at a predetermined value corresponding to the Snoek peak for the interstitial element in question, the isothermal development of the coefficient of internal friction is followed by measuring the variation in the level of the Snoek peak as a function of time, and the precipitation kinetics are deducted from the kinetics of the lowering of said peak.

15. An application of the device according to claim 14 wherein the interstitial element is carbon.

16. An application of the device according to claim 14 wherein the interstitial element is nitrogen.

## Patentansprüche

1. Vorrichtung zur Bestimmung des Koeffizienten der inneren Reibung einer langgestreckten und aus ferromagnetischem Material bestehenden Probe (1), insbesondere zur Bestimmung des Gehalts an Zwischengitterelementen derselben, mit Anregungsmitteln (5, 6, 7) für ein Setzen der Probe (1) in einen Zustand von Längsschwingungen, Mitteln (30) zum Ausschalten der Anregungsmittel, Mitteln (28, 29, 30, 32, 33) zum Nachweisen und Berechnen von gedämpften Schwingungen nach Abschalten der Anregung zur Ermöglichung der Bestimmung des Koeffizienten der inneren Reibung, dadurch gekennzeichnet, daß die Anregungsmittel Mittel zur Anregung auf elektromagnetischem Wege aufweisen, welche drei koaxiale und die Probe (1) umgebende zylindrische Wicklungen (5, 6, 7) umfassen, von denen eine Primärwicklung (5) um eines der Enden der Probe angeordnet und mit ersten Speisemitteln (21, 22) zum Schwingenlassen der Probe in Längsrichtung durch Magnetostriktion verbunden ist, eine Polarisationswicklung (6) um den Mittelteil der Probe (1) herum angeordnet und mit zweiten Speisemitteln (25, 26, 27) zum Bewirken einer magnetischen Polarisation derselben verbunden ist, und eine Sekundärwicklung (7) um das andere Ende der Probe (1) herum angeordnet und mit den Mitteln zum Nachweisen und Berechnen von gedämpften Schwingungen, deren Amplitude größer oder gleich der Anfangsschwingungsamplitude multipliziert mit einem Koeffizienten $\alpha$ ist, verbunden ist.

2. Vorrichtung nach Anspruch 1, dadurch gekennzeichnet, daß die Mittel (30) zum Abschalten der Anregung durch Mittel zum Abschalten der Speisemittel für die Primärwicklung (5) gebildet sind.

3. Vorrichtung nach Anspruch 1 oder 2, dadurch gekennzeichnet, daß die Mittel zum Nachweisen der gedämpften Schwingungen durch Vergleichsmittel (405) gebildet sind, deren einer Eingang mit dem Ausgang der Sekundärwicklung (7) durch Signalverarbeitungsmittel und deren anderer Eingang mit Mitteln zum Liefern eines Referenzsignals verbunden ist.

4. Vorrichtung nach Anspruch 3, dadurch gekennzeichnet, daß die Vergleichsmittel durch einen Operationsverstärker (405) gebildet sind.

5. Vorrichtung nach Anspruch 3 oder 4, dadurch gekennzeichnet, daß die ein Referenzsignal liefernden Mittel durch einen Widerstand (414) und einen Kondensator (415) gebildet sind, die mit dem Eingang der Vergleichsmittel (405) zur Aufgabe auf diesen einer Spannung, die gleich dem Anfangswert der Schwingungsamplitude multipliziert mit dem Koeffizienten $\alpha$ ist, verbunden sind.

6. Vorrichtung nach irgendeinem der Ansprüche 3 bis 5, dadurch gekennzeichnet, daß die Verarbeitungsmittel durch Regelungsmittel (28), Filter- und Verstärkungsmittel (29) und Formungsmittel (33) für die Ausgangssignale der Sekundärwicklung (7) gebildet sind.

7. Vorrichtung nach irgendeinem der Ansprüche 1 bis 6, dadurch gekennzeichnet, daß sie Anzeigemittel (32) zur Anzeige der Anzahl N von gedämpften Schwingungen aufweist.

8. Vorrichtung nach irgendeinem der Ansprüche 1 bis 7, dadurch gekennzeichnet, daß die Wicklungen (5, 6, 7) und die Probe (1) in einer mit Heizmitteln verbundenen Meßzelle (4) angeordnet sind und daß Überwachungs- und Regelungsmittel (15, 16, 39) für die Temperatur in der Zelle (4) vorgesehen sind.

9. Vorrichtung nach Anspruch 8, dadurch gekennzeichnet, daß die Heizmittel (17, 18) durch Mittel zum Einblasen von Heißluft in den Raum gebildet sind, von denen wenigstens eines mit der Zelle (4) über eine Leitung (13) verbunden ist, welche vor dem einen der Enden der Probe mündet.

10. Vorrichtung nach Anspruch 9, dadurch gekennzeichnet, daß die Heizmittel Heizwiderstände (17, 18) aufweisen, die mit den Regelungsmitteln (39) verbunden sind, so daß die Temperatur im Inneren der Zelle (4) geregelt wird.

11. Vorrichtung nach Anspruch 10, dadurch gekennzeichnet, daß die Regelungsmittel (39) einen mit den Heizwiderständen (17, 18) verbundenen Leistungstransistor (513) aufweisen, derart, daß deren Speisung die Temperatur in der Zelle (4) regelnd gesteuert wird.

12. Vorrichtung nach irgendeinem der Ansprüche 1 bis 11, dadurch gekennzeichnet, daß die Probe (1) auf isolierende Träger (2, 3) in den Wicklungen (5, 6, 7) gesetzt ist.

13. Vorrichtung nach Anspruch 12, dadurch gekennzeichnet, daß die Träger (2, 3) aus Teflon sind.

14. Verwendung der Vorrichtung nach irgendeinem der vorstehenden Ansprüche zur Untersuchung der Ausscheidungskinetik eines Zwischengitterelements in Stahl, wobei die Temperatur der Probe auf einem bestimmten Wert gehalten wird, der dem Snoek-Peak für das betrachtete Zwischengitterelement entspricht, der isotherme Verlauf des Koeffizienten der inneren Reibung verfolgt wird, indem die Änderung der Höhe des Snoek-Peaks in Abhängigkeit von der Zeit gemessen wird und daraus die Ausscheidungskinetik anhand der Sinkkinetik des Peaks abgeleitet wird.

15. Verwendung der Vorrichtung nach Anspruch 14, wobei das Zwischengitterelement Kohlenstoff ist.

16. Verwendung der Vorrichtung nach Anspruch 14, wobei das Zwischengitterelement Stickstoff ist.

**FIG.1**

**FIG.2**

FIG.3

FIG.4

EP 0 252 847 B1

22

FIG.5

EP 0 252 847 B1

**FIG. 6**

EP 0 252 847 B1

FIG. 7

FIG.8

FIG.9

EP 0 252 847 B1

FIG_10

EP 0 252 847 B1

FIG.11

**FIG.12**

EP 0 252 847 B1

FIG.13